# EUROPEAN PATENT APPLICATION

(11) **EP 4 376 308 A1**
(43) Date of publication of application: **29.05.2024**
(21) Application number: 23209738.6
(22) Date of filing: 14.11.2023
(51) Int. Cl.: H04B 1/04, H04B 17/17

(54) **ELECTRONIC DEVICE FOR PREVENTING DAMAGE TO RADIO FREQUENCY FRONT END, AND ELECTRONIC SYSTEM INCLUDING THE SAME**

(30) Priority: 28.11.2022 KR 20220161347; 25.09.2023 US 202318473641
(71) Applicant: Samsung Electronics Co., Ltd., Suwon-si, Gyeonggi-do 16677 (KR)
(72) Inventor: JEONG, Wonseok, Suwon-si, Gyeonggi-do 16677 (KR); PARK, Kwonyeol, Suwon-si, Gyeonggi-do 16677 (KR); CHOI, Ilmuk, Suwon-si, Gyeonggi-do 16677 (KR); KIL, Ki-Ho, Suwon-si, Gyeonggi-do 16677 (KR); KIM, Anna, Suwon-si, Gyeonggi-do 16677 (KR); CHO, Youngik, Suwon-si, Gyeonggi-do 16677 (KR)
(74) Representative: Kuhnen & Wacker Patent- und Rechtsanwaltsbüro PartG mbB

(57) **Abstract**

An electronic device for preventing or reducing damage to a radio frequency front end (RFFE). The electronic device including a memory device configured to store operating state information of a RFFE and a damage prevention condition of the RFFE, the RFFE providing a signal path for delivering a first transmission (TX) signal to an antenna, and a TX signal controller configured to generate a TX signal control signal in response to determining that the operating state information does not satisfy the damage prevention condition, the TX signal control signal causing the first TX signal to be blocked or a magnitude of the first TX signal to be reduced.

## Description

### CROSS-REFERENCE TO RELATED APPLICATIONS

This application claims priority under 35 U.S.C. § 119 to Korean Patent Application No. 10-2022-0161347 filed on November 28, 2022, in the Korean Intellectual Property Office, the disclosures of which are incorporated by reference herein in their entireties.

### BACKGROUND

Embodiments of the present disclosure described herein relate to an electronic device, and more particularly, relate to an electronic device capable of monitoring operating state information of a radio frequency front end (RFFE) and preventing or reducing damage to the RFFE depending on the monitoring result, and an electronic system including the same.

As configurations of portable terminals (e.g., mobile devices such as smartphones) capable of communicating by using radio frequency (RF) signals are becoming more complicated and diversified, configurations of RFFEs included in the portable terminals are also becoming gradually more complex.

For example, portable terminals increasingly utilize a combination of mobile communication standards and as many RF bands as possible using limited hardware, and thus, control of RFFE elements (implemented in hardware) included in RFFEs of the portable terminals is becoming gradually more complex. Accordingly, operations of the RFFE elements may be abnormally controlled.

When transmission (TX) signals, which are incapable of being accepted by the RFFE elements, are entered into the RFFE elements, the RFFE elements may be damaged. When a failure occurs in the RFFE due to damage to the RFFE elements, the failure is fixed by replacing the damaged RFFE elements with new RFFE elements.

### SUMMARY

Embodiments of the present disclosure provide an electronic device that determines (or monitors) whether operating state information of an RFFE satisfies a damage prevention condition of the RFFE, and blocks a TX signal to be transmitted to the RFFE or reduces a magnitude of the TX signal, when the operating state information of the RFFE does not satisfy the damage prevention condition of the RFFE, thereby preventing (or reducing) damage or burnout of the RFFE, and an electronic system including the same.

Embodiments of the present disclosure provide an electronic device that records the operating state information of the RFFE in a memory device, allows an administrator to identify the recorded operating state information, and allows the administrator to easily analyze a setting process (or setting history) for the operating state information of the RFFE when the operating state information of the RFFE does not satisfy damage prevention condition of the RFFE, and an electronic system including the same.

According to embodiments, an electronic device includes a memory device configured to store operating state information of a radio frequency front end (RFFE) and a damage prevention condition of the RFFE, the RFFE providing a signal path for delivering a first transmission (TX) signal to an antenna, and a TX signal controller configured to generate a TX signal control signal in response to determining that the operating state information does not satisfy the damage prevention condition, the TX signal control signal causing the first TX signal to be blocked or a magnitude of the first TX signal to be reduced.

According to embodiments, an electronic device includes a memory device configured to store operating state information of an RFFE and a damage prevention condition of the RFFE, the RFFE providing a signal path for delivering a first transmission (TX) signal to an antenna, a processor configured to receive the operating state information and the damage prevention condition, and write the operating state information and the damage prevention condition in the memory device, and a TX signal controller configured to generate a TX signal control signal in response to determining that the operating state information does not satisfy the damage prevention, the TX signal control signal causing the first TX signal to be blocked or a magnitude of the first TX signal to be reduced.

According to embodiments, an electronic system includes an RFFE configured to provide a signal path for delivering a first transmission (TX) signal to an antenna, a memory device configured to store operating state information of the RFFE and a damage prevention condition of the RFFE, and a TX signal controller configured to generate a TX signal control signal in response to determining the operating state information does not satisfy the damage prevention condition, the TX signal control signal causing the first TX signal to be blocked or a magnitude of the first TX signal to be reduced.

### BRIEF DESCRIPTION OF THE FIGURES

The above and other features of the present disclosure will become apparent by describing in detail embodiments thereof with reference to the accompanying drawings.
FIG. 1 is a block diagram of an electronic system including a modem having a TX signal controller configured to generate a control signal, according to embodiments of the present disclosure.
FIG. 2 is an example of a table for a damage prevention condition set not to damage RFFE elements included in the RFFE shown in FIG. 1 and operating state information for controlling a current operating state of the RFFE elements.
FIG. 3 is a block diagram of an electronic system including a modem having a TX signal controller configured to generate at least one of two control signal signals, according to embodiments of the present disclosure.
FIG. 4 is a block diagram of an electronic system including a modem having a TX signal controller configured to generate at least one of four control signal signals, according to embodiments of the present disclosure.
FIG. 5 is a block diagram of an electronic system including a modem having a processor configured to generate a control signal, according to embodiments of the present disclosure.
FIG. 6 is a block diagram of an electronic system including a modem having a processor configured to generate at least one of two control signal signals, according to embodiments of the present disclosure.
FIG. 7 is a block diagram of an electronic system including a modem having a processor configured to generate at least one of two control signal signals, according to embodiments of the present disclosure.
FIG. 8 is a block diagram of an electronic system including an RFIC having a TX signal controller configured to generate at least one of five control signal signals, according to embodiments of the present disclosure.
FIG. 9 is a block diagram of an electronic system including an RFIC having a digital gain controller, a clock signal generator and a TX signal controller configured to generate a switch control signal, according to embodiments of the present disclosure.
FIG. 10 is a block diagram of an electronic system including an RFIC having a TX signal controller configured to generate at least one of four control signal signals, according to embodiments of the present disclosure.
FIG. 11 is a block diagram of an electronic system including an RFIC having a clock signal generator and a TX signal controller configured to generate a switch control signal, according to embodiments of the present disclosure.
FIG. 12 is a block diagram of an electronic system including an RFIC having a TX signal controller configured to generate at least one of two control signal signals, according to embodiments of the present disclosure.
FIG. 13 is a block diagram of an electronic system including an RFIC having a TX signal controller configured to generate a switch control signal, according to embodiments of the present disclosure.
FIG. 14 is a block diagram of an electronic system including an RFIC having a processor and a TX signal controller configured to generate at least one of six control signal signals, according to embodiments of the present disclosure.
FIG. 15 is a block diagram of an electronic system including an RFIC having a processor and a TX signal controller configured to generate at least one of five control signal signals, according to embodiments of the present disclosure.
FIG. 16 is a block diagram of an electronic system including an RFIC having a processor and a TX signal controller configured to generate at least one of three control signal signals, according to embodiments of the present disclosure.
FIG. 17 is a block diagram of an electronic system for controlling transmission of a TX signal to be transmitted to an RFFE having a plurality of RFFE control interfaces, according to embodiments of the present disclosure.
FIG. 18 is a flowchart illustrating an operation of an electronic system for controlling transmission of a TX signal to be transmitted to an RFFE, according to embodiments of the present disclosure.
FIG. 19 is a block diagram of a mobile device controlling transmission of a TX signal to be transmitted to an RFFE, according to embodiments of the present disclosure.

### DETAILED DESCRIPTION

In this specification, controlling a TX signal to be transmitted to an RFFE includes (e.g., means) blocking the TX signal to be transmitted to the RFFE and/or reducing the magnitude of the TX signal for to prevent (or reduce) damage or burnout of an RFFE element included in the RFFE. Here, the TX signal may mean an RF TX signal. According to embodiments, the TX signal may mean a digital TX signal.

In addition, a fact that a first electronic device transmits the TX signal to the RFFE includes a fact that the first electronic device transmits the TX signal directly to the RFFE, and/or a fact that the first electronic device indirectly transmits the TX signal to the RFFE through a second electronic device.

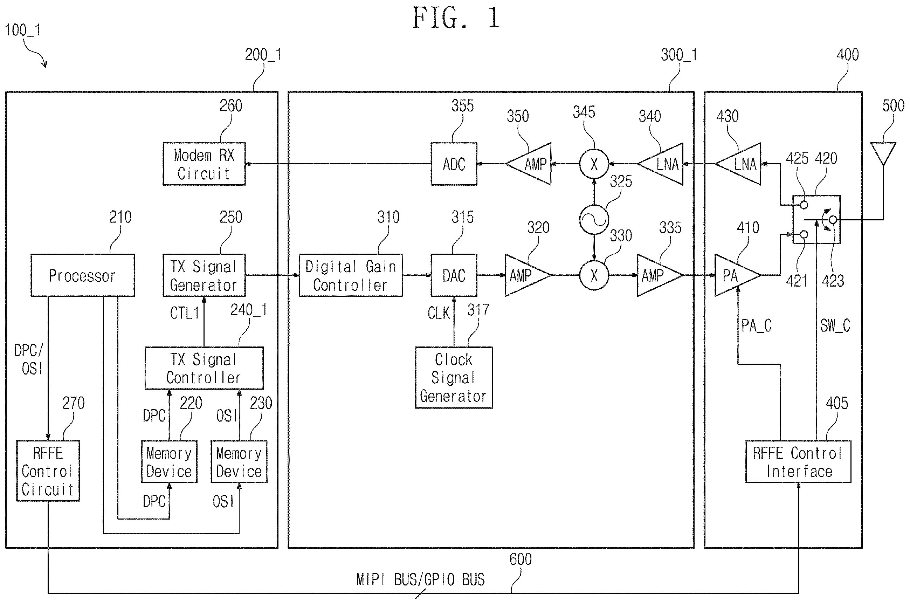

FIG. 1 is a block diagram of an electronic system including a modem having a TX signal controller configured to generate a control signal, according to embodiments of the present disclosure.

An electronic system 100_1 (it is also referred to as a "semiconductor system" or "communication system") includes a first electronic device 200_1, a second electronic device 300_1, a third electronic device 400, and/or an antenna 500.

Each of the electronic devices 200, 300, and 400 (here, 200 collectively indicates 200_1 to 200_16, and 300 collectively indicates 300_1 to 300_16) to be described with reference to FIGS. 1 to 19 may mean an integrated circuit (IC), an IC chip, a radio-frequency (RF) module, a semiconductor device, a semiconductor package including the IC chip, and/or a system on chip (SoC).

According to embodiments, an electronic system 100 (here, 100 collectively indicates 100_1 to 100_16) may be an RF module, an RF system, or a SoC, which is capable of exchanging an RF signal with another electronic system.

The first electronic device 200 that modulates or demodulates a digital signal may be a modem or a baseband modem.

The second electronic device 300 may be an RFIC that performs up-conversion on an analog TX signal having a low frequency to an analog TX signal having a high frequency by using a mixer, and performs down-conversion on an analog reception (RX) signal having a high frequency to an analog RX signal having a low frequency by using the mixer and another mixer. The RFIC means an electronic circuit using active devices that transmit and receive signals in a radio frequency range.

The third electronic device 400 that determines whether a signal (e.g., a TX signal or a RX signal) passes, and amplifies the signal, may be an RFFE. The RFFE 400 is also referred to as a radio frequency front end module (RFFEM).

The RFFE 400 provides a signal path for delivering a TX signal to the antenna 500. The RFFE 400 means a circuitry that performs a function of receiving and transmitting an RF signal.

Parts such as a power amplifier, a low noise amplifier (LNA), an antenna switch module, an RF filter, and a duplexer may be positioned between the RFIC (or modem) and the antenna 500. In this specification, a configuration including all or part of the parts may be referred to as "RFFE". For example, an electronic device such as a mobile device or a smart phone may include a plurality of RFFEs.

Hereinafter, for convenience of description, the first electronic device 200 is referred to as a "modem", and the second electronic device 300 is referred to as an "RFIC".

The modem 200_1 includes a processor 210, a first memory device 220, a second memory device 230, a TX signal controller 240_1, a TX signal generator 250, a modem RX circuit 260, and/or an RFFE control circuit 270.

The processor 210 may store a damage prevention condition DPC (it is also referred to as "damage prevention condition values" or "damage prevention data"), capable of preventing (or reducing) damage (or burnout) of the RFFE 400, in the first memory device 220, and may store operating state information OSI (it is also referred to as "operating state values" or "operating state data"), indicating an operating state (or a current operating state) of the RFFE 400, in the second memory device 230. Each of the memory devices 220 and 230 may be a register, but embodiments are not limited thereto. According to embodiments, references to damage prevention provided herein are not limited to damage prevention and may also refer to damage reduction.

To prevent (or reduce) damage to the RFFE 400, the damage prevention condition DPC may be set in an RFFE control interface 405 of the RFFE 400. However, when the operating state information OSI is set in the RFFE control interface 405 instead of the damage prevention condition DPC due to a defect or malfunction of the electronic device 200 or 300 or a worker's mistake (e.g., programming mistakes for the RFFE control interface 405) operating (e.g., testing) the electronic device 200 or 300, damage (or burnout) may occur in the RFFE 400.

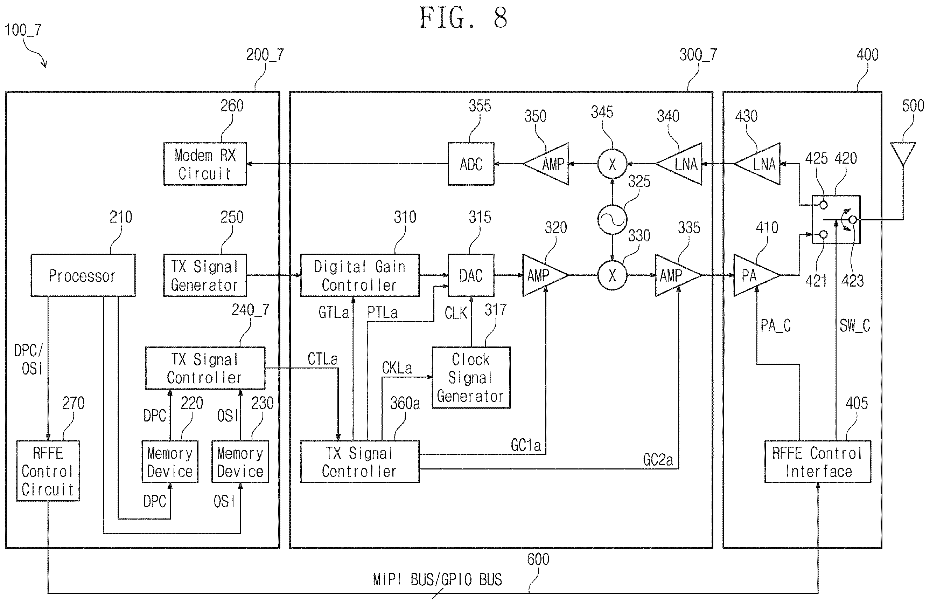

However, even when the operating state information OSI is set in the RFFE control interface 405 of the RFFE 400, the first electronic device 200 of FIGS. 1 to 7 or the second electronic device 300 of FIGS. 8 to 17 having a structure according to embodiments of the present disclosure may block the TX signal to be transmitted to the RFFE 400 in advance or may reduce the magnitude of the TX signal to be transmitted to the RFFE 400 in advance depending on the monitoring result of the operating state information OSI. Accordingly, the first electronic device 200 of FIGS. 1 to 7 or the second electronic device 300 of FIGS. 8 to 17 may prevent (or reduce) damage to the RFFE 400 in advance.

In this specification, for convenience of description, it is illustrated that a memory device 220 or 305 for storing the damage prevention condition DPC and a memory device 230 or 307 for storing the operating state information OSI are separated from each other. However, according to embodiments, the damage prevention condition DPC and the operating state information OSI may be stored in one memory device.

When the operating state information OSI of the RFFE 400 stored in a memory device does not satisfy the damage prevention condition DPC of the RFFE 400 stored in the memory device, the TX signal controller 240_1 generates a TX signal control signal for blocking the TX signal to be transmitted to the RFFE 400 or reducing a magnitude of the TX signal to be transmitted to the RFFE 400.

Examples of a case where the operating state information OSI does not satisfy the damage prevention condition DPC include a case where the operating state information OSI is different from the damage prevention condition DPC, or a case where operating state values (alternatively, operating state data or OSI) is different from damage prevention condition values (alternatively, damage prevention data or DPC). Here, each value may be expressed as data 1 (or logic 1) or data 0 (or logic 0).

For example, the TX signal controller 240_1 compares the damage prevention condition DPC stored in the first memory device 220 with the operating state information OSI stored in the second memory device 230. When the operating state information OSI does not satisfy the damage prevention condition DPC, the TX signal controller 240_1 generates a first TX signal control signal CTL1 for controlling the transmission of a TX signal (or a digital TX signal related to the TX signal).

The TX signal generator 250 may generate a digital TX signal to be transmitted to the RFIC 300_1. For example, the TX signal generator 250 may block (this is also referred to as 'stop') the generation of a digital TX signal in response to the first TX signal control signal CTL1 generated when the operating state information OSI does not satisfy the damage prevention condition DPC. According to embodiments, blocking or stopping of the of the TX signal (and/or the generation of the TX signal) may also, or alternatively, refer to reducing a magnitude of the TX signal (and/or causing the TX signal to be generated with a reduced magnitude).

The processor 210 may transmit the damage prevention condition DPC or the operating state information OSI to the RFFE control circuit 270, and the RFFE control circuit 270 may set the damage prevention condition DPC or the operating state information OSI in the RFFE control interface 405 of the RFFE 400 through an external bus 600.

According to embodiments, whenever the processor 210 transmits new operating state information OSI to the RFFE control interface 405 through the RFFE control circuit 270 and the external bus 600, the processor 210 may update previous operating state information stored in the second memory device 230 to the new operating state information OSI.

According to embodiments, because an update history for the operating state information OSI is stored in the second memory device 230, the processor 210 may read the update history. For example, an administrator may identify (or obtain) the update history by using an electronic device, which is capable of controlling the processor 210 or is capable of being connected to the processor 210.

The external bus 600 may be a mobile industry processor interface (MIPI) bus capable of transmitting signals corresponding to a MIPI protocol, or a general-purpose input/output (GPIO) bus connected to GPIO pins, but is not limited thereto. Accordingly, an external bus 600 or 610 described in this specification refers to a bus capable of transmitting the damage prevention condition DPC or the operating state information OSI to the RFFE control interface 405 of the RFFE 400.

The modem RX circuit 260 may receive and process a digital signal transmitted from the RFIC 300 1.

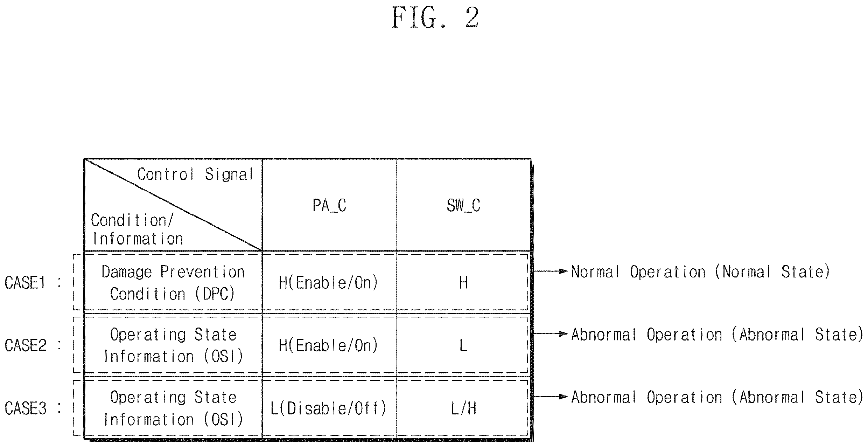

According to the damage prevention condition DPC to be described with reference to case 1 CASE1 of FIG. 2, RFFE elements 410 and 420 included in the RFFE 400 may transmit a TX signal transmitted (e.g., obtained) from the RFIC 300_1 to the antenna 500. Even when the TX signal is delivered to the RFFE 400, the damage prevention condition DPC may be a setting condition for the RFFE 400. The setting condition may mean that an element (e.g., a power amplifier 410, etc.) included in the RFFE 400 is not damaged (or incurs a reduced amount of damage).

The damage prevention condition DPC may include a condition for a connection state of an antenna switch module included in the RFFE 400. For example, when the RFFE 400 is not connected to the antenna 500 (e.g., when the RFFE 400 does not satisfy the damage prevention condition DPC) when a TX signal is delivered from the RFIC 300_1 to the RFFE 400, the TX signal may fail to be delivered to the antenna 500 and may be reflected into the RFFE 400, thereby damaging or burning out the power amplifier.

To control an operating state (or a current operating state) of the RFFE elements 410 and 420, the operating state information OSI may be information (or values) set in the RFFE control interface 405.

According to the operating state information OSI to be described with reference to case 2 CASE2 and case 3 CASE3 of FIG. 2, the RFFE elements 410 and 420 included in the RFFE 400 may not transmit the TX signal transmitted from the RFIC 300_1 to the antenna 500, or the RFFE element 410 may be damaged or burnt out when the RFFE element 410 continuously tries to transmit the TX signal to the antenna 500.

The RFIC 300_1 includes a digital gain controller 310, a digital-to-analog converter (DAC) 315, a clock signal generator 317, a first amplifier 320, a local oscillator 325, a first mixer 330, a second amplifier 335, a low noise amplifier (LNA) 340, a second mixer 345, a third amplifier 350, and/or an analog-to-digital converter (ADC) 355.

According to embodiments, the RFIC 300_1 may not include the digital gain controller 310.

According to embodiments, a TX control circuit that blocks a TX signal to be transmitted to the RFFE 400 through the RFIC 300_1 or reduces the magnitude of the TX signal to be transmitted to the RFFE 400 through the RFIC 300_1 means one of the components 250, 310, 315, 317, 320, and/or 335 or a combination of the components.

For example, when the operating state information OSI does not satisfy the damage prevention condition DPC, the digital gain controller 310 reduces the digital TX signal generated by the TX signal generator 250 (this is also referred to as the reduction of a gain of the digital TX signal or the reduction of the magnitude of the digital TX signal) and outputs the reduced digital TX signal during a transmission operation for preventing damage to (or reducing damage of) the RFFE 400.

For example, when the digital TX signal generated by the TX signal generator 250 is "0111111111" in binary, the digital gain controller 310 may reduce the magnitude of the digital TX signal ("0111111111" in binary) and may output "0011111111" in binary as an output signal for preventing damage to (or reducing damage of) the RFFE 400.

The DAC 315 converts the digital TX signal, which has the reduced magnitude and which is output from the digital gain controller 310, into an analog TX signal by using a clock signal CLK output from the clock signal generator 317.

The first amplifier 320 receives and amplifies an output signal of the DAC 315 and then transmits the amplified signal to the first mixer 330.

The first mixer 330 performs up-conversion on an output signal of the first amplifier 320 having a first frequency by using a local frequency of the local oscillator 325 and transmits a TX signal having a second frequency to the second amplifier 335. The second amplifier 335 amplifies the TX signal having the second frequency and transmits the amplified TX signal to the power amplifier 410. In this case, the second frequency is higher than the first frequency.

During a reception operation, the LNA 340 receives and amplifies an output signal of an LNA 430 of the RFFE 400 and then outputs the amplified signal to the second mixer 345.

The second mixer 345 performs down-conversion on an output signal of the LNA 340 having the second frequency by using the local frequency of the local oscillator 325 and transmits a RX signal having the first frequency to the third amplifier 350. The third amplifier 350 receives and amplifies the RX signal having the first frequency and transmits the amplified signal to the ADC 355. The ADC 355 converts an output signal of the third amplifier 350 into a digital signal and transmits the digital signal to the modem RX circuit 260. According to embodiments, the TX signal generator 250 may receive transmission data for the TX signal from the processor 210 and/or the application processor 120. According to embodiments, the modem RX circuit 260 may transmit the digital signal to the processor 210 and/or the application processor 120.

FIG. 2 is an example of a table for a damage prevention condition set not to damage (or to reduce damage to) RFFE elements included in the RFFE shown in FIG. 1 and operating state information for controlling a current operating state of the RFFE elements.

Referring to FIGS. 1 and 2, the RFFE 400 includes the RFFE control interface 405 (this is also referred to as a "control signal generation circuit"), the power amplifier 410, an RF TX/RX switch 420, and/or the LNA 430. According to embodiments, the power amplifier 410 may mean a power amplifier module (PAM).

As illustrated in case 1 CASE1 of FIG. 2, it is assumed that the RFFE control interface 405 generates a power amplifier control signal PA_C having a high level (H) and an RF TX/RX switch control signal SW_C having a high level (H) when the RFFE control interface 405 receives the damage prevention condition DPC through the external bus 600. While the discussion of FIG. 2 herein describes the RFFE control interface 405 as receiving the damage prevention condition DPC, this may refer to the reception of operating state information OSI that matches the damage prevention condition DPC according to embodiments.

The power amplifier 410 is enabled (this is referred to as "on or power on") in response to the power amplifier control signal PA_C having the high level (H), and the RF TX/RX switch 420 connects switch terminals 421 and 423 to each other in response to the RF TX/RX switch control signal SW_C having the high level (H).

For example, in case 1 CASE1, the RF TX/RX switch 420 operates in a TX mode, and thus a TX signal amplified by the power amplifier 410 is transmitted to the antenna 500 through the RF TX/RX switch 420. Even when the TX signal amplified by the power amplifier 410 is continuously transmitted to the antenna 500 through the RF TX/RX switch 420, the RFFE element 410 is not damaged or burnt out (or incurs a lower amount of damage).

When the damage prevention condition DPC is set in the RFFE control interface 405, the RFFE 400 normally transmits the TX signal transmitted from the RFIC 300_1 to the antenna 500. That is, the RFFE 400 performs a normal operation, which is referred to as a "normal state".

However, as illustrated in case 2 CASE2 of FIG. 2, it is assumed that the RFFE control interface 405 generates the power amplifier control signal PA_C having the high level (H) and the RF TX/RX switch control signal SW_C having a low level (L) when the RFFE control interface 405 receives the operating state information OSI (it is also referred to as "current operating state information") through the external bus 600.

In case 2 CASE2, the power amplifier 410 is enabled in response to the power amplifier control signal PA_C having the high level (H), and the RF TX/RX switch 420 connects switch terminals 423 and 425 to each other in response to the RF TX/RX switch control signal SW_C having the low level (L). For example, the RF TX/RX switch 420 operates in a RX mode, and thus the TX signal amplified by the power amplifier 410 is not transmitted to the antenna 500 through the RF TX/RX switch 420.

When the switch terminals 423 and 425 instead of the switch terminals 421 and 423 of the RF TX/RX switch 420 are connected to each other (e.g., when an operating mode of the RF TX/RX switch 420 is set as an RX mode instead of a TX mode) while the power amplifier 410 is transmitting the amplified TX signal to the RF TX/RX switch 420, the amplified TX signal is not transmitted to the antenna 500 through the RF TX/RX switch 420 and is reflected from the switch terminal 421 of the RF TX/RX switch 420 toward an output terminal of the power amplifier 410. That is, as the amplified TX signal having high power is reflected toward the output terminal of the power amplifier 410, the power amplifier 410 may be damaged or burnt out.

When the operating state information OSI is set in the RFFE control interface 405, the RFFE 400 fails to transmit a TX signal transmitted from the RFIC 300_1 to the antenna 500. That is, the RFFE 400 performs an abnormal operation, which is referred to as an abnormal state.

As illustrated in case 3 CASE3 of FIG. 2, it is assumed that the RFFE control interface 405 generates the power amplifier control signal PA_C having a low level (L) and the RF TX/RX switch control signal SW_C having a low level (L) (or a high level (H)) when the RFFE control interface 405 receives the operating state information OSI through the external bus 600.

In case 3 CASE3, the power amplifier 410 is disabled (this is referred to as "off or power off") in response to the power amplifier control signal PA_C having the low level (L).

When an output signal of the second amplifier 335 is continuously entered into the input terminal of the power amplifier 410 while the power amplifier 410 is disabled, the power amplifier 410 may be damaged or burnt out.

When the operating state information OSI is set in the RFFE control interface 405, the RFFE 400 fails to transmit a TX signal transmitted from the RFIC 300_1 to the antenna 500.

As described with reference to case 2 CASE2 or case 3 CASE3 of FIG. 2, when the modem 200_1 blocks a TX signal to be transmitted to the RFIC 300_1 or reduces the magnitude of the TX signal to be transmitted to the RFIC 300_1 even though the operating state information OSI is set in the RFFE control interface 405 of the RFFE 400, the possibility of damage or burnout of the RFFE element 410 that processes the TX signal transmitted from the RFIC 300_1 is reduced.

For example, values (or data) corresponding to the damage prevention condition DPC in case 1 (CASE1) may be 11 in binary; values (or data) corresponding to the operating state information OSI in Case 2 (CASE2) may be 10 in binary; and, values (or data) corresponding to the operating state information OSI in case 3 (CASE3) may be 00 or 01 in binary.

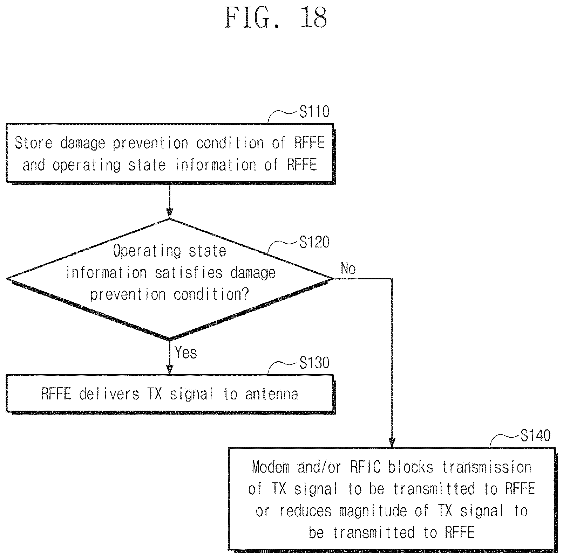

FIG. 18 is a flowchart illustrating an operation of an electronic system for controlling transmission of a TX signal to be transmitted to an RFFE, according to embodiments of the present disclosure.

Referring to FIGS. 1, 2, and 18, it is assumed that the processor 210 of the modem 200_1 used as a TX signal transmission control device stores the damage prevention condition DPC in the first memory device 220 and stores the operating state information OSI corresponding to case 2 CASE2 in the second memory device 230 (S110). According to embodiments, the damage prevention condition DPC and the operating state information OSI may be stored in one memory device (S1 10).

The processor 210 of the modem 200_1 sets (or programs) the operating state information OSI corresponding to case 2 CASE2 in the RFFE control interface 405 through the RFFE control circuit 270 and the external bus 600.

In case 2 CASE2, the power amplifier 410 is enabled in response to the power amplifier control signal PA_C having a high level (H), and the RF TX/RX switch 420 connects the switch terminals 423 and 425 to each other in response to the RF TX/RX switch control signal SW_C having a low level (L) so as to operate in a RX mode.

The TX signal controller 240_1 of the modem 200_1 compares the damage prevention condition DPC and the operating state information OSI (S120). When the operating state information OSI does not satisfy the damage prevention condition DPC (e.g., when the damage prevention condition DPC and the operating state information OSI are different from each other based on the damage prevention condition DPC (OSI ≠ DPC, NO of S120)), the TX signal controller 240_1 of the modem 200_1 generates the first TX signal control signal CTL1 for performing operation S140.

Accordingly, in response to the first TX signal control signal CTL1, the TX signal generator 250 stops generating a digital TX signal or blocks the digital TX signal to be transmitted to the RFIC 300_1 (S140).

As another example, it is assumed that the processor 210 of the modem 200_1 stores the damage prevention condition DPC in the first memory device 220, and stores the same (or similar) operating state information (OSI = DPC) as the damage prevention condition DPC in the second memory device 230 (5110).

The processor 210 of the modem 200_1 sets (or programs) the same (or similar) operating state information OSI (OSI = DPC) as the damage prevention condition DPC in the RFFE control interface 405 through the RFFE control circuit 270 and the external bus 600.

The TX signal controller 240_1 compares the damage prevention condition DPC and the operating state information OSI (S120). When the operating state information OSI satisfies the damage prevention condition DPC (e.g., when the damage prevention condition DPC and the operating state information OSI are the same as (or similar to) each other (OSI = DPC, YES of S120)), the TX signal controller 240_1 of the modem 200_1 generates the first TX signal control signal CTL1 for performing operation S130.

The TX signal generator 250 generates a digital TX signal in response to the first TX signal control signal CTL1, and transmits the generated digital TX signal to the RFIC 300_1. The RFIC 300_1 processes (e.g., digital-to-analog conversion, up-conversion, and amplification) the received digital TX signal by using the components 310, 315, 320, 330, and 335 and transmits the processed TX signal to the RFFE 400.

Accordingly, the RFFE 400 outputs the TX signal transmitted from the RFIC 300_1 to the antenna 500 through the RFFE elements 410 and 420 (S130).

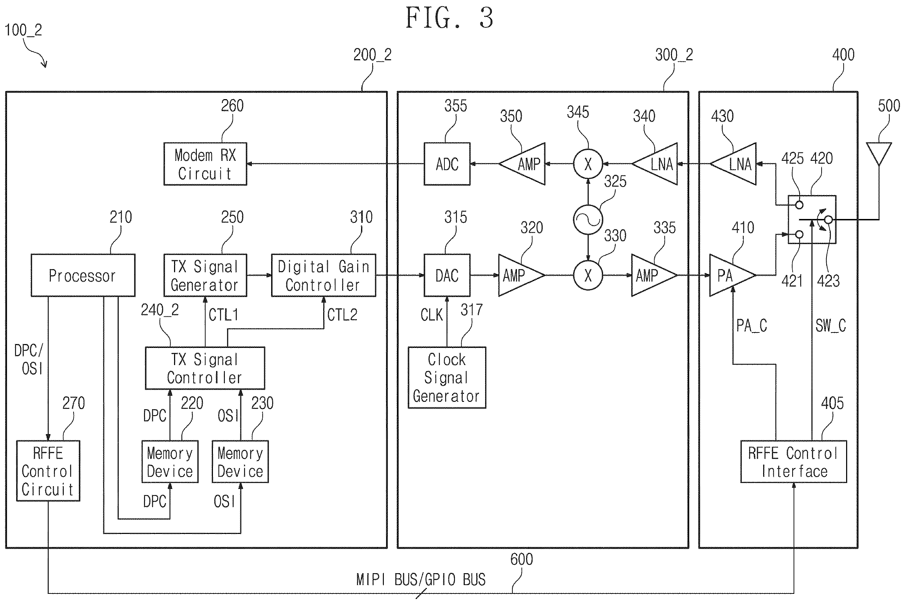

FIG. 3 is a block diagram of an electronic system including a modem having a TX signal controller configured to generate at least one of two control signal signals, according to embodiments of the present disclosure.

Referring to FIG. 3, the electronic system 100_2 includes the modem 200_2, the RFIC 300_2, the RFFE 400, and/or the antenna 500.

The modem 200_2 includes the processor 210, the first memory device 220, the second memory device 230, a TX signal controller 240_2, the TX signal generator 250, the digital gain controller 310, the modem RX circuit 260, and/or the RFFE control circuit 270. According to embodiments, the modem 200_2 may not include the digital gain controller 310.

The RFIC 300_2 includes the DAC 315, the clock signal generator 317, the first amplifier 320, the local oscillator 325, the first mixer 330, the second amplifier 335, the LNA 340, the second mixer 345, the third amplifier 350, and/or the ADC 355.

Referring to FIGS. 2, 3, and 18, it is assumed that the processor 210 of the modem 200_2 used as a TX signal transmission control device stores the damage prevention condition DPC in the first memory device 220 and stores the operating state information OSI corresponding to case 2 CASE2 in the second memory device 230 (S110).

The processor 210 of the modem 200_2 programs the operating state information OSI corresponding to case 2 CASE2 in the RFFE control interface 405 through the RFFE control circuit 270 and the external bus 600.

In case 2 CASE2, the power amplifier 410 is enabled in response to the power amplifier control signal PA_C having a high level (H), and the RF TX/RX switch 420 connects the switch terminals 423 and 425 to each other in response to the RF TX/RX switch control signal SW_C having a low level (L) so as to operate in a RX mode.

The TX signal controller 240_2 of the modem 200_2 compares the damage prevention condition DPC and the operating state information OSI (S120). When the operating state information OSI does not satisfy the damage prevention condition DPC (NO in S120), the TX signal controller 240_2 of the modem 200_2 generates at least one of the first TX signal control signal CTL1 and/or a second TX signal control signal CTL2 to perform operation S140.

According to embodiments, in response to the first TX signal control signal CTL1, the TX signal generator 250 stops generating a digital TX signal or blocks the transmission of the digital TX signal to be transmitted to the RFIC 300_2 (S140).

According to embodiments, in response to the second TX signal control signal CTL2, the digital gain controller 310 reduces the magnitude of the digital TX signal generated by the TX signal generator 250 and transmits the digital TX signal having the reduced magnitude to the DAC 315 of the RFIC 300_2 (S140). The signal (or a digital signal) having the reduced magnitude is generated in operation S140 to prevent (or reduce) damage to the RFFE element 410 of the RFFE 400.

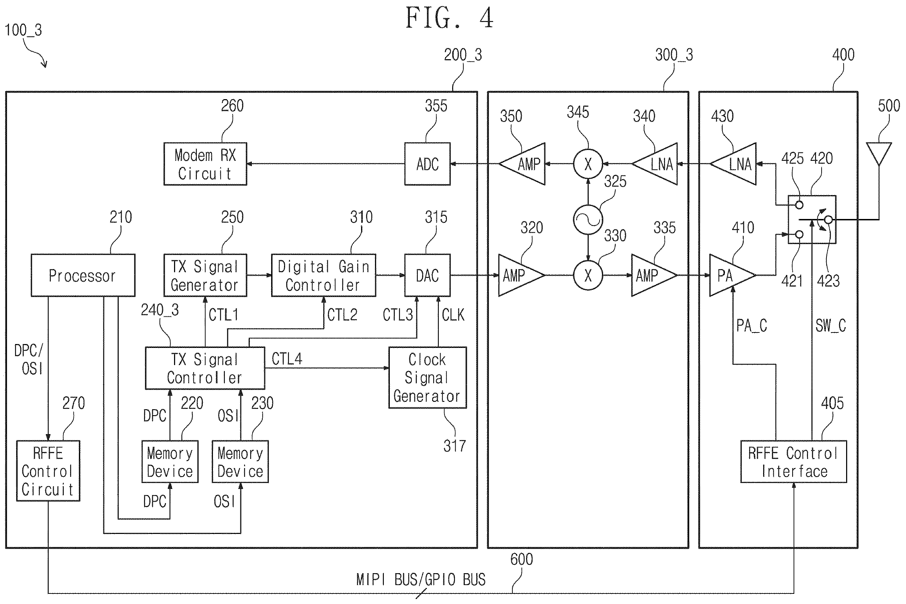

FIG. 4 is a block diagram of an electronic system including a modem having a TX signal controller configured to generate at least one of four control signal signals, according to embodiments of the present disclosure.

Referring to FIG. 4, the electronic system 100_3 includes the modem 200_3, the RFIC 300_3, the RFFE 400, and/or the antenna 500.

The modem 200_3 includes the processor 210, the first memory device 220, the second memory device 230, a TX signal controller 240_3, the TX signal generator 250, the digital gain controller 310, the DAC 315, the clock signal generator 317, the modem RX circuit 260, the RFFE control circuit 270, and/or the ADC 355. According to embodiments, the modem 200_3 may not include the digital gain controller 310.

The RFIC 300_3 includes the first amplifier 320, the local oscillator 325, the first mixer 330, the second amplifier 335, the LNA 340, the second mixer 345, and/or the third amplifier 350.

Referring to FIGS. 2, 4, and 18, it is assumed that the processor 210 of the modem 200_3 used as a TX signal transmission control device stores the damage prevention condition DPC in the first memory device 220 and stores the operating state information OSI corresponding to case 2 CASE2 in the second memory device 230 (5110).

The processor 210 of the modem 200_3 programs the operating state information OSI corresponding to case 2 CASE2 in the RFFE control interface 405 through the RFFE control circuit 270 and the external bus 600.

The TX signal controller 240_3 of the modem 200_3 compares the damage prevention condition DPC and the operating state information OSI (S120). When the operating state information OSI does not satisfy the damage prevention condition DPC (NO in S120), the TX signal controller 240_3 of the modem 200_3 generates at least one of the first TX signal control signal CTL1, the second TX signal control signal CTL2, a third TX signal control signal CTL3, and/or a fourth TX signal control signal CTL4 to perform operation S140.

According to embodiments, in response to the first TX signal control signal CTL1, the TX signal generator 250 stops generating a digital TX signal or blocks the transmission of the digital TX signal to be transmitted to the RFIC 300_3 (S140).

According to embodiments, in response to the second TX signal control signal CTL2, the digital gain controller 310 reduces the magnitude of the digital TX signal generated by the TX signal generator 250 and transmits the digital TX signal having the reduced magnitude to the DAC 315 (S140).

According to embodiments, the DAC 315 is disabled or powered off in response to the third TX signal control signal CTL3. For example, the operating voltage supplied to the DAC 315 may be blocked by the third TX signal control signal CTL3 (S140).

According to embodiments, in response to the fourth TX signal control signal CTL4, the clock signal generator 317 may be disabled or may block the clock signal CLK supplied to the DAC 315 (S140).

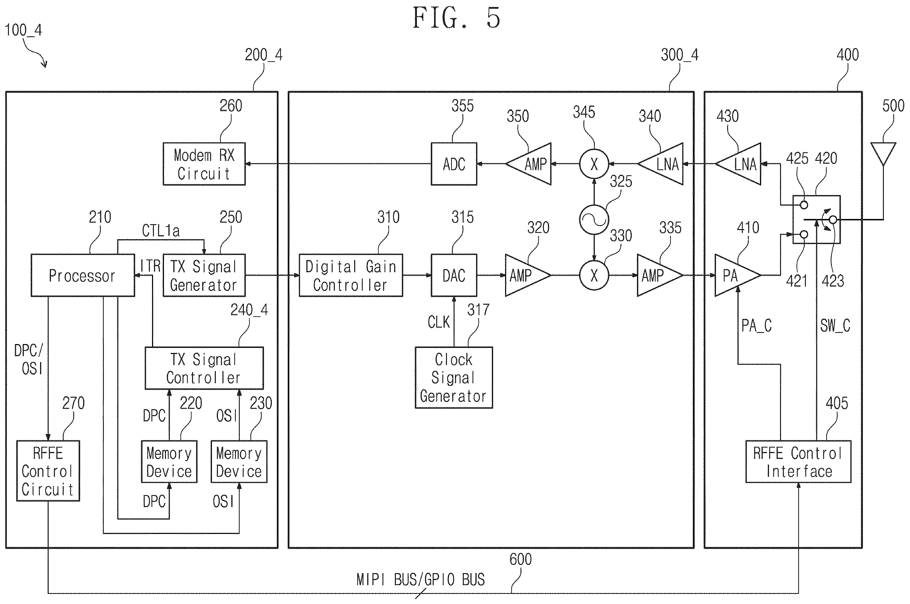

FIG. 5 is a block diagram of an electronic system including a modem having a processor configured to generate a control signal, according to embodiments of the present disclosure.

Referring to FIG. 5, the electronic system 100_4 includes the modem 200_4, the RFIC 300_4, the RFFE 400, and/or the antenna 500.

The modem 200_4 includes the processor 210, the first memory device 220, the second memory device 230, a TX signal controller 240_4, the TX signal generator 250, the modem RX circuit 260, and/or the RFFE control circuit 270.

The RFIC 300_4 includes the digital gain controller 310, the DAC 315, the clock signal generator 317, the first amplifier 320, the local oscillator 325, the first mixer 330, the second amplifier 335, the LNA 340, the second mixer 345, the third amplifier 350, and/or the ADC 355. According to embodiments, the RFIC 300_4 may not include the digital gain controller 310.

Referring to FIGS. 2, 5, and 18, it is assumed that the processor 210 of the modem 200_4 used as a TX signal transmission control device stores the damage prevention condition DPC in the first memory device 220 and stores the operating state information OSI corresponding to case 2 CASE2 in the second memory device 230 (S110).

The processor 210 of the modem 200_4 programs the operating state information OSI corresponding to case 2 CASE2 in the RFFE control interface 405 through the RFFE control circuit 270 and the external bus 600.

The TX signal controller 240_4 of the modem 200_4 compares the damage prevention condition DPC and the operating state information OSI (S120). When the operating state information OSI does not satisfy the damage prevention condition DPC (NO in S120), the TX signal controller 240_4 of the modem 200_4 generates an interrupt signal ITR corresponding to the TX signal control signal and transmits the interrupt signal ITR to the processor 210.

The processor 210 is interrupted in response to the interrupt signal ITR and generates a first TX signal control signal CTL1a.

In response to the first TX signal control signal CTL1a, the TX signal generator 250 stops generating a digital TX signal or blocks the transmission of the digital TX signal to be transmitted to the RFIC 300_4 (S140). For example, the TX signal generator 250 is disabled or turned off under control of the processor 210.

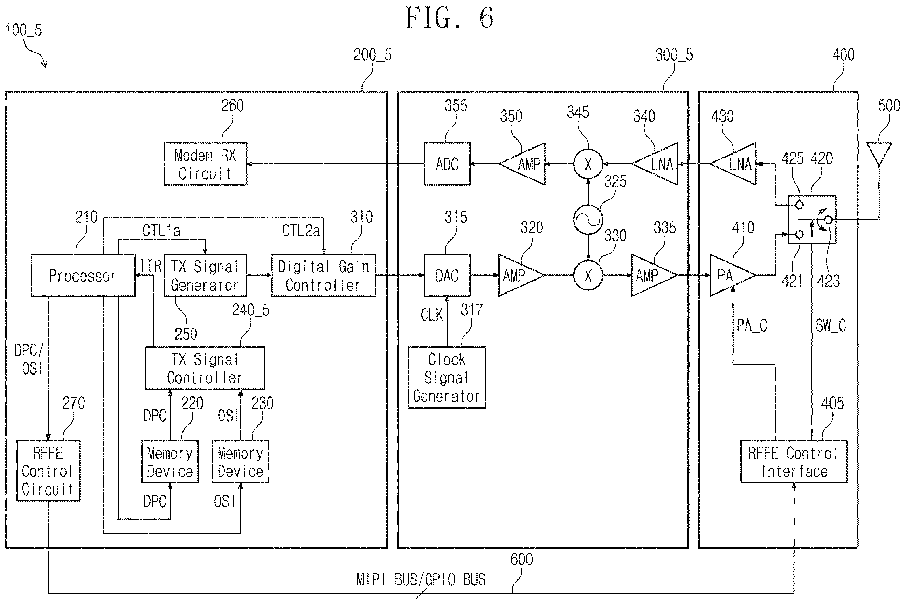

FIG. 6 is a block diagram of an electronic system including a modem having a processor configured to generate at least one of two control signal signals, according to embodiments of the present disclosure.

Referring to FIG. 6, the electronic system 100_5 includes the modem 200_5, the RFIC 300_5, the RFFE 400, and/or the antenna 500.

The modem 200_5 includes the processor 210, the first memory device 220, the second memory device 230, a TX signal controller 240_5, the TX signal generator 250, the digital gain controller 310, the modem RX circuit 260, and/or the RFFE control circuit 270. According to embodiments, the modem 200_5 does not include the digital gain controller 310.

The RFIC 300_5 includes the DAC 315, the clock signal generator 317, the first amplifier 320, the local oscillator 325, the first mixer 330, the second amplifier 335, the LNA 340, the second mixer 345, the third amplifier 350, and/or the ADC 355.

Referring to FIGS. 2, 6, and 18, it is assumed that the processor 210 of the modem 200_5 used as a TX signal transmission control device stores the damage prevention condition DPC in the first memory device 220 and stores the operating state information OSI corresponding to case 2 CASE2 in the second memory device 230 (S110).

The processor 210 of the modem 200_5 programs the operating state information OSI corresponding to case 2 CASE2 in the RFFE control interface 405 through the RFFE control circuit 270 and the external bus 600.

The TX signal controller 240_5 of the modem 200_5 compares the damage prevention condition DPC and the operating state information OSI (S120). When the operating state information OSI does not satisfy the damage prevention condition DPC (NO in S120), the TX signal controller 240_5 of the modem 200_5 generates the interrupt signal ITR corresponding to the TX signal control signal and transmits the interrupt signal ITR to the processor 210.

The processor 210 is interrupted in response to the interrupt signal ITR and generates at least one of the first TX signal control signal CTL1a and/or a second TX signal control signal CTL2a.

According to embodiments, in response to the first TX signal control signal CTL1a, the TX signal generator 250 stops generating a digital TX signal or blocks the digital TX signal to be transmitted to the RFIC 300_5 (S140).

According to embodiments, in response to the second TX signal control signal CTL2a, the digital gain controller 310 reduces the magnitude of the digital TX signal generated by the TX signal generator 250 and transmits the digital TX signal having the reduced magnitude to the DAC 315 of the RFIC 300_5 (S140).

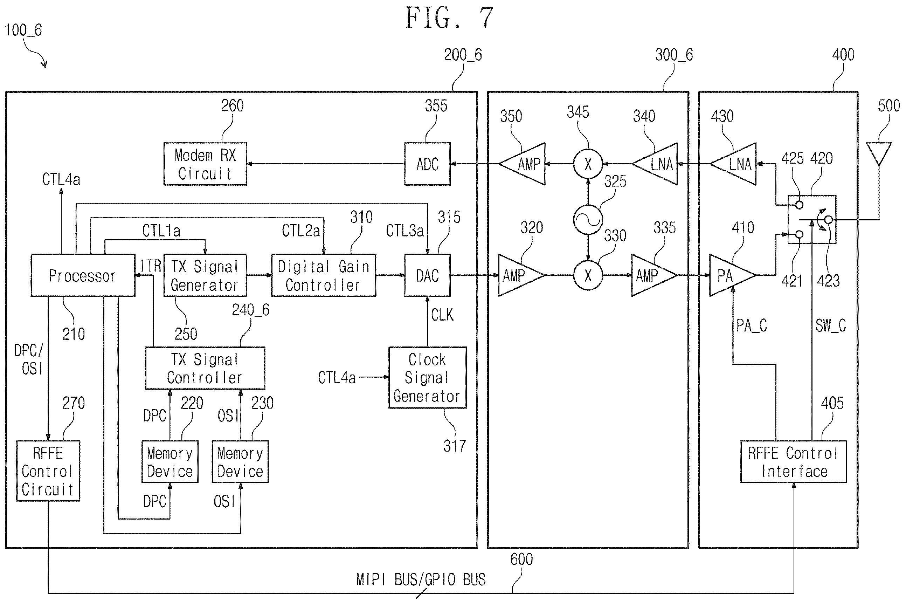

FIG. 7 is a block diagram of an electronic system including a modem having a processor configured to generate at least one of two control signal signals, according to embodiments of the present disclosure.

Referring to FIG. 7, the electronic system 100_6 includes the modem 200_6, the RFIC 300_6, the RFFE 400, and/or the antenna 500.

The modem 200_6 includes the processor 210, the first memory device 220, the second memory device 230, a TX signal controller 240_6, the TX signal generator 250, the digital gain controller 310, the DAC 315, the clock signal generator 317, the modem RX circuit 260, the RFFE control circuit 270, and/or the ADC 355. According to embodiments, the modem 200_6 may not include the digital gain controller 310.

The RFIC 300_6 includes the first amplifier 320, the local oscillator 325, the first mixer 330, the second amplifier 335, the LNA 340, the second mixer 345, and/or the third amplifier 350.

Referring to FIGS. 2, 7, and 18, it is assumed that the processor 210 of the modem 200_6 used as a TX signal transmission control device stores the damage prevention condition DPC in the first memory device 220 and stores the operating state information OSI corresponding to case 2 CASE2 in the second memory device 230 (S110).

The processor 210 of the modem 200_6 programs the operating state information OSI corresponding to case 2 CASE2 in the RFFE control interface 405 through the RFFE control circuit 270 and the external bus 600.

The TX signal controller 240_6 of the modem 200_6 compares the damage prevention condition DPC and the operating state information OSI (S120). When the operating state information OSI does not satisfy the damage prevention condition DPC (NO in S120), the TX signal controller 240_6 of the modem 200_6 generates the interrupt signal ITR corresponding to the TX signal control signal and transmits the interrupt signal ITR to the processor 210.

The processor 210 is interrupted in response to the interrupt signal ITR and generates at least one of the first TX signal control signal CTL1a, the second TX signal control signal CTL2a, a third TX signal control signal CTL3a, and a fourth TX signal control signal CTL4a.

According to embodiments, in response to the first TX signal control signal CTL1a, the TX signal generator 250 stops generating a digital TX signal or blocks the digital TX signal to be transmitted to the RFIC 300_6 (S140).

According to embodiments, in response to the second TX signal control signal CTL2a, the digital gain controller 310 reduces the magnitude of the digital TX signal generated by the TX signal generator 250 and transmits the digital TX signal having the reduced magnitude to the DAC 315 (S140).

According to embodiments, the DAC 315 is disabled or powered off in response to the third TX signal control signal CTL3a (S140). According to embodiments, in response to the fourth TX signal control signal CTL4a, the clock signal generator 317 may be disabled or may block the clock signal CLK supplied to the DAC 315 (S140).

According to embodiments described with reference to FIGS. 1 to 7, the modem 200_1, 200_2, 200_3, 200_4, 200_5, or 200_6 performs an operation of comparing the damage prevention condition DPC with the operating state information OSI, an operation of generating at least one TX signal control signal depending on the comparison result, and an operation of blocking a TX signal to be transmitted to the RFIC 300_1, 300_2, 300_3, 300_4, 300_5, or 300_6 or reducing the magnitude of the TX signal in response to the at least one TX signal control signal.

As the modem 200_1, 200_2, 200_3, 200_4, 200_5, or 200_6 blocks the TX signal to be transmitted to the RFIC 300_1, 300_2, 300_3, 300_4, 300_5, or 300_6 or reduces the magnitude of the TX signal, the modem 200_1, 200_2, 200_3, 200_4, 200_5, or 200_6 may block the TX signal to be transmitted to the RFFE 400 or reduce the magnitude of the TX signal as a result.

The processor 210 of the modem 200_1, 200_2, 200_3, 200_4, 200_5, or 200_6 may store (or program) the operating state information OSI to be transmitted to the RFFE 400 in the second memory device 230, and thus an administrator may easily identify a current operating state of the RFFE elements 410 and 420 of the RFFE 400 by using (or obtaining) the operating state information OSI stored (or programmed) in the second memory device 230.

According to embodiments, the processor 210 of the modem 200_1, 200_2, 200_3, 200_4, 200_5, or 200_6 may store, in the second memory device 230, the operating state information OSI for controlling current operating states of RFFE elements of the RFFE 400 controlled for each of GPIO pins included in the RFFE control circuit 270.

According to embodiments, the processor 210 of the modem 200_1, 200_2, 200_3, 200_4, 200_5, or 200_6 may store, in the second memory device 230, the operating state information OSI for controlling current operating states of RFFE elements of the RFFE 400 corresponding to an RF channel for each RF channel.

FIG. 8 is a block diagram of an electronic system having a TX signal controller configured to generate at least one of five control signal signals, according to embodiments of the present disclosure.

Referring to FIG. 8, the electronic system 100_7 includes the modem 200_7, the RFIC 300_7, the RFFE 400, and/or the antenna 500.

The modem 200_7 includes the processor 210, the first memory device 220, the second memory device 230, a TX signal controller 240_7, the TX signal generator 250, the modem RX circuit 260, and/or the RFFE control circuit 270.

The RFIC 300_7 includes the digital gain controller 310, the DAC 315, the clock signal generator 317, the first amplifier 320, the local oscillator 325, the first mixer 330, the second amplifier 335, the LNA 340, the second mixer 345, the third amplifier 350, the ADC 355, and a TX signal controller 360a. According to embodiments, the RFIC 300_7 may not include the digital gain controller 310.

Referring to FIGS. 2, 8, and 18, it is assumed that the processor 210 of the modem 200_7 stores the damage prevention condition DPC in the first memory device 220 and stores the operating state information OSI corresponding to case 2 CASE2 in the second memory device 230 (S110).

The processor 210 of the modem 200_7 programs the operating state information OSI corresponding to case 2 CASE2 in the RFFE control interface 405 through the RFFE control circuit 270 and the external bus 600.

The TX signal controller 240_7 of the modem 200_7 compares the damage prevention condition DPC with the operating state information OSI and generates an RFIC control signal CTLa depending on the comparison result (S120).

When the operating state information OSI does not satisfy the damage prevention condition DPC depending on the comparison result (NO of S120), the TX signal controller 360a of the RFIC 300_7 generates at least one of a magnitude control signal GTLa, a power control signal PTLa, a clock signal control signal CKLa, a first gain control signal GC1a, and/or a second gain control signal GC2a depending on the RFIC control signal CTLa generated by the TX signal controller 240_7 of the modem 200_7. According to embodiments, each of the control signals GTLa, PTLa, CKLa, GC1a, and GC2a performs the function of a TX signal control signal. According to embodiments, the TX signal controller 360a may generate the at least one of the control signals GTLa, PTLa, CKLa, GC1a and/or GC2a in response to receiving the RFIC control signal CTLa and/or may generate the at least one of the control signals GTLa, PTLa, CKLa, GC1a and/or GC2a based on a corresponding indication included in the RFIC control signal CTLa.

According to embodiments, in response to the magnitude (or gain) control signal GTLa, the digital gain controller 310 reduces the magnitude of the digital TX signal generated by the TX signal generator 250 and transmits the digital TX signal having the reduced magnitude to the DAC 315 (S140). The digital TX signal having the reduced magnitude is also referred to as a digital TX signal having a reduced gain.

According to embodiments, the DAC 315 is disabled or powered off in response to the power control signal PTLa (S140). For example, the operating voltage supplied to the DAC 315 may be blocked by the power control signal PTLa (S140).

According to embodiments, in response to the clock signal control signal CKLa, the clock signal generator 317 may be disabled or may block the clock signal CLK supplied to the DAC 315 (S140).

According to embodiments, in response to the first gain control signal GC1a, the first amplifier 320 reduces the magnitude of the output signal of the DAC 315, and outputs the signal having the reduced magnitude to the first mixer 330 (S140).

According to embodiments, in response to the second gain control signal GC2a, the second amplifier 335 reduces the magnitude of the output signal of the first mixer 330 and outputs the signal having the reduced magnitude to the power amplifier 410 (S140).

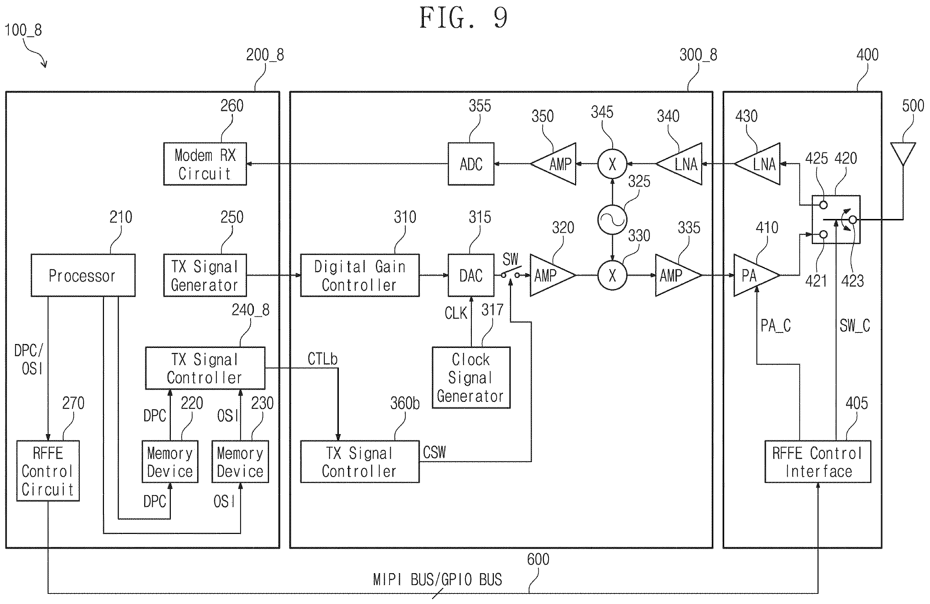

FIG. 9 is a block diagram of an electronic system including an RFIC having a digital gain controller, a clock signal generator and a TX signal controller configured to generate a switch control signal, according to embodiments of the present disclosure.

Referring to FIG. 9, the electronic system 100_8 includes the modem 200_8, the RFIC 300_8, the RFFE 400, and/or the antenna 500.

The modem 200_8 includes the processor 210, the first memory device 220, the second memory device 230, a TX signal controller 240_8, the TX signal generator 250, the modem RX circuit 260, and/or the RFFE control circuit 270.

The RFIC 300_8 includes the digital gain controller 310, the DAC 315, the clock signal generator 317, the first amplifier 320, the local oscillator 325, the first mixer 330, the second amplifier 335, the LNA 340, the second mixer 345, the third amplifier 350, the ADC 355, a TX signal controller 360b, and/or a switch circuit SW. According to embodiments, the RFIC 300_8 may not include the digital gain controller 310.

FIG. 9 shows an example in which the switch circuit SW is located between the DAC 315 and the first amplifier 320. However, according to embodiments, the switch circuit SW may be positioned between the two corresponding components 310 and 315, the two corresponding components 320 and 330, the two corresponding components 330 and 335, or the two corresponding components 335 and 410.

Referring to FIGS. 2, 9, and 18, it is assumed that the processor 210 of the modem 200_8 stores the damage prevention condition DPC in the first memory device 220 and stores the operating state information OSI corresponding to case 2 CASE2 in the second memory device 230 (S110).

The processor 210 of the modem 200_8 programs the operating state information OSI corresponding to case 2 CASE2 in the RFFE control interface 405 through the RFFE control circuit 270 and the external bus 600.

The TX signal controller 240_8 of the modem 200_8 compares the damage prevention condition DPC with the operating state information OSI and generates an RFIC control signal CTLb depending on the comparison result (S120).

When the operating state information OSI does not satisfy the damage prevention condition DPC (NO of S120), the TX signal controller 360b of the RFIC 300_8 generates a switch control signal CSW depending on the RFIC control signal CTLb generated by the TX signal controller 240_8 of the modem 200_8. The switch control signal CSW performs the function of a TX signal control signal.

Because the switch circuit SW is turned off in response to the switch control signal CSW, an output terminal of the DAC 315 and an input terminal of the first amplifier 320 are electrically separated from each other. Accordingly, an output signal of the DAC 315 is not transmitted to the first amplifier 320.

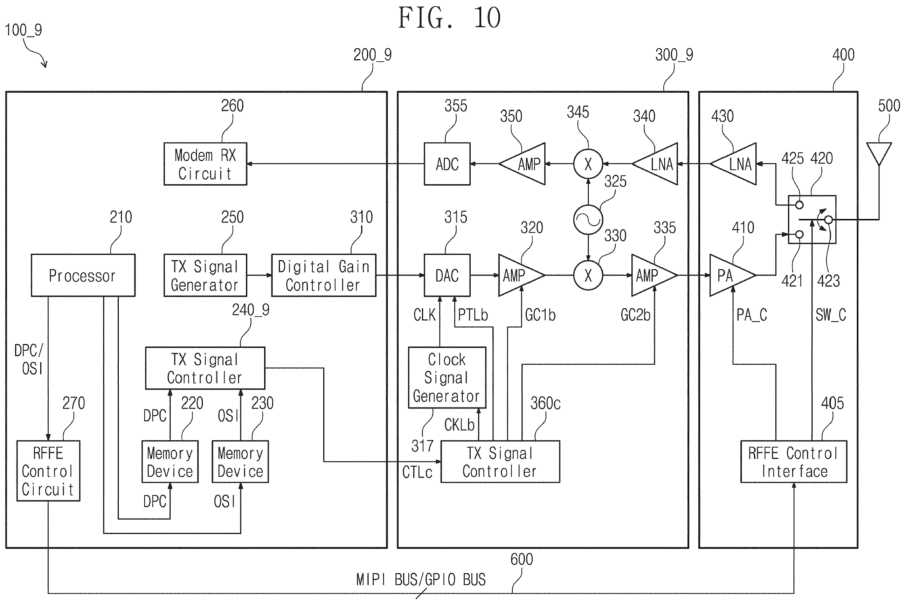

FIG. 10 is a block diagram of an electronic system including an RFIC having a TX signal controller configured to generate at least one of four control signal signals, according to embodiments of the present disclosure.

Referring to FIG. 10, the electronic system 100_9 includes the modem 200_9, the RFIC 300_9, the RFFE 400, and/or the antenna 500.

The modem 200_9 includes the processor 210, the first memory device 220, the second memory device 230, a TX signal controller 240_9, the TX signal generator 250, the digital gain controller 310, the modem RX circuit 260, and/or the RFFE control circuit 270. According to embodiments, the modem 200_9 may not include the digital gain controller 310.

The RFIC 300_8 includes the DAC 315, the clock signal generator 317, the first amplifier 320, the local oscillator 325, the first mixer 330, the second amplifier 335, the LNA 340, the second mixer 345, the third amplifier 350, the ADC 355, and/or a TX signal controller 360c.

Referring to FIGS. 2, 10, and 18, it is assumed that the processor 210 of the modem 200_9 stores the damage prevention condition DPC in the first memory device 220 and stores the operating state information OSI corresponding to case 2 CASE2 in the second memory device 230 (S110).

The processor 210 of the modem 200_9 programs the operating state information OSI corresponding to case 2 CASE2 in the RFFE control interface 405 through the RFFE control circuit 270 and the external bus 600.

The TX signal controller 240_9 of the modem 200_9 compares the damage prevention condition DPC with the operating state information OSI and generates an RFIC control signal CTLc depending on the comparison result (S120).

When the operating state information OSI does not satisfy the damage prevention condition DPC (NO of S120), the TX signal controller 360c of the RFIC 300_9 generates at least one of a power control signal PTLb, a clock signal control signal CKLb, a first gain control signal GC1b, and/or a second gain control signal GC2b depending on the RFIC control signal CTLc generated by the TX signal controller 240_9 of the modem 200_9. According to embodiments, each of the control signals PTLb, CKLb, GC1b, and GC2b performs the function of a TX signal control signal. According to embodiments, the TX signal controller 360c may generate the at least one of the control signals PTLb, CKLb, GC1b and/or GC2b in response to receiving the RFIC control signal CTLc and/or may generate the at least one of the control signals PTLb, CKLb, GC1b and/or GC2b based on a corresponding indication included in the RFIC control signal CTLc.

According to embodiments, the DAC 315 is disabled or powered off in response to the power control signal PTLb (S140). For example, the operating voltage supplied to the DAC 315 may be blocked by the power control signal PTLb (S140).

According to embodiments, in response to the clock signal control signal CKLb, the clock signal generator 317 may be disabled or may block the clock signal CLK supplied to the DAC 315 (S140).

According to embodiments, in response to the first gain control signal GC1b, the first amplifier 320 reduces the magnitude of the output signal of the DAC 315, and outputs the signal having the reduced magnitude to the first mixer 330 (S140).

According to embodiments, in response to the second gain control signal GC2b, the second amplifier 335 reduces the magnitude of the output signal of the first mixer 330 and outputs the signal having the reduced magnitude to the power amplifier 410 (S140).

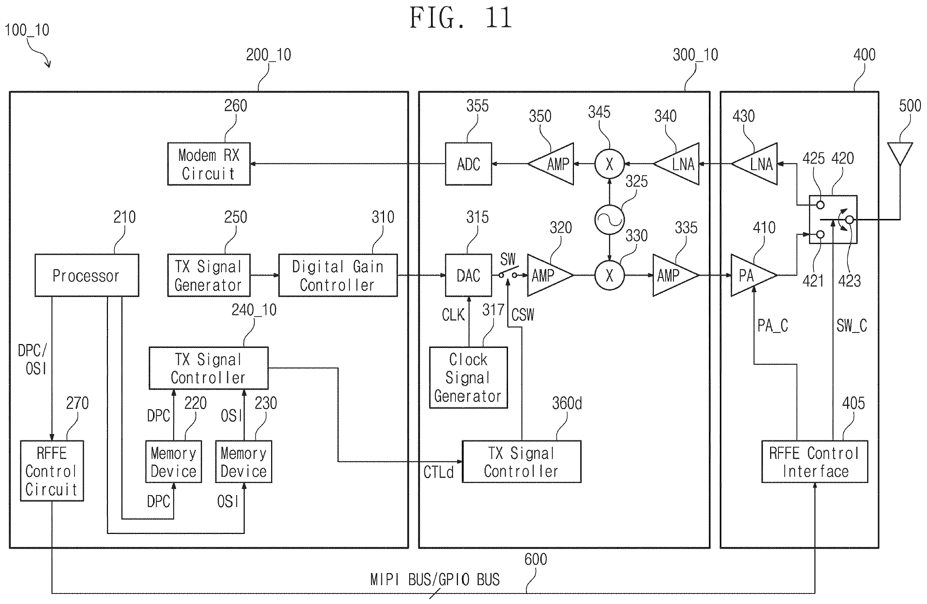

FIG. 11 is a block diagram of an electronic system including an RFIC having a clock signal generator and a TX signal controller configured to generate a switch control signal, according to embodiments of the present disclosure.

Referring to FIG. 11, the electronic system 100_10 includes the modem 200_10, the RFIC 300_10, the RFFE 400, and/or the antenna 500.

The modem 200_10 includes the processor 210, the first memory device 220, the second memory device 230, a TX signal controller 240_10, the TX signal generator 250, the digital gain controller 310, the modem RX circuit 260, and/or the RFFE control circuit 270. According to embodiments, the modem 200_10 may not include the digital gain controller 310.

The RFIC 300_10 includes the DAC 315, the clock signal generator 317, the first amplifier 320, the local oscillator 325, the first mixer 330, the second amplifier 335, the LNA 340, the second mixer 345, the third amplifier 350, the ADC 355, a TX signal controller 360d, and/or the switch circuit SW.

FIG. 11 shows an example in which the switch circuit SW is located between the DAC 315 and the first amplifier 320. However, according to embodiments, the switch circuit SW may be positioned between the two corresponding components 310 and 315, the two corresponding components 320 and 330, the two corresponding components 330 and 335, or the two corresponding components 335 and 410.

Referring to FIGS. 2, 11, and 18, it is assumed that the processor 210 of the modem 200_10 stores the damage prevention condition DPC in the first memory device 220 and stores the operating state information OSI corresponding to case 2 CASE2 in the second memory device 230 (S110).

The processor 210 of the modem 200_10 programs the operating state information OSI corresponding to case 2 CASE2 in the RFFE control interface 405 through the RFFE control circuit 270 and the external bus 600.

The TX signal controller 240_10 of the modem 200_10 compares the damage prevention condition DPC with the operating state information OSI and generates an RFIC control signal CTLd depending on the comparison result (S120).

When the operating state information OSI does not satisfy the damage prevention condition DPC (NO of S120), the TX signal controller 360d of the RFIC 300_10 generates the switch control signal CSW depending on the RFIC control signal CTLd generated by the TX signal controller 240_10 of the modem 200_10. According to embodiments, the switch control signal CSW performs the function of a TX signal control signal.

Because the switch circuit SW is turned off in response to the switch control signal CSW, an output terminal of the DAC 315 and an input terminal of the first amplifier 320 are electrically separated from each other (S140).

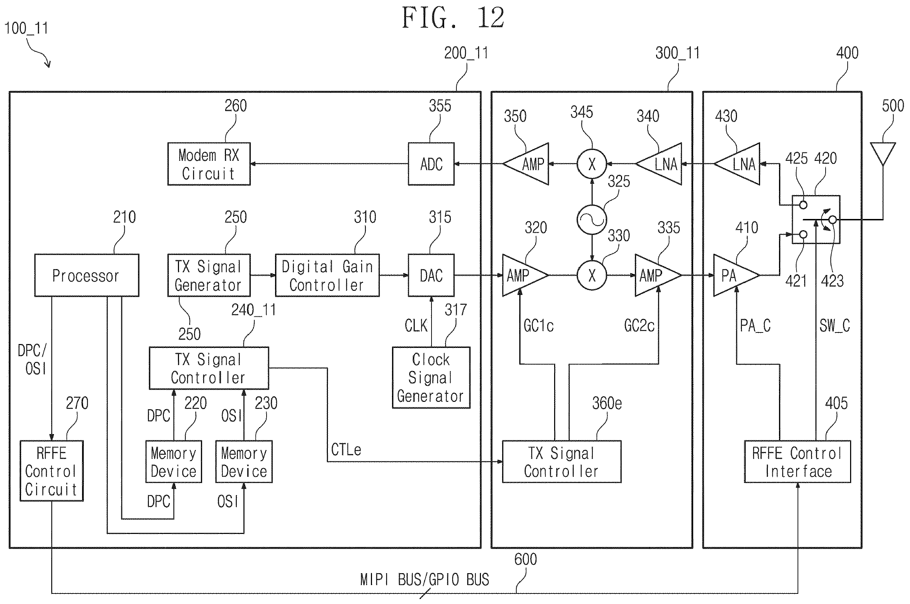

FIG. 12 is a block diagram of an electronic system including an RFIC having a TX signal controller configured to generate at least one of two control signal signals, according to embodiments of the present disclosure.

Referring to FIG. 12, the electronic system 100_11 includes the modem 200_11, the RFIC 300_11, the RFFE 400, and/or the antenna 500.

The modem 200_11 includes the processor 210, the first memory device 220, the second memory device 230, a TX signal controller 240_11, the TX signal generator 250, the digital gain controller 310, the DAC 315, the clock signal generator 317, the modem RX circuit 260, the RFFE control circuit 270, and/or the ADC 355. According to embodiments, the modem 200_11 may not include the digital gain controller 310.

The RFIC 300_11 includes the first amplifier 320, the local oscillator 325, the first mixer 330, the second amplifier 335, the LNA 340, the second mixer 345, the third amplifier 350, and/or a TX signal controller 360e.

Referring to FIGS. 2, 12, and 18, it is assumed that the processor 210 of the modem 200_11 stores the damage prevention condition DPC in the first memory device 220 and stores the operating state information OSI corresponding to case 2 CASE2 in the second memory device 230 (S110).

The processor 210 of the modem 200_11 programs the operating state information OSI corresponding to case 2 CASE2 in the RFFE control interface 405 through the RFFE control circuit 270 and the external bus 600.

The TX signal controller 240_11 of the modem 200_11 compares the damage prevention condition DPC with the operating state information OSI and generates an RFIC control signal CTLe depending on the comparison result (S120).

When the operating state information OSI does not satisfy the damage prevention condition DPC (NO of S120), the TX signal controller 360e of the RFIC 300_11 generates at least one of a first gain control signal GC1c and/or a second gain control signal GC2c depending on the RFIC control signal CTLe generated by the TX signal controller 240_11 of the modem 200_11. According to embodiments, each of the control signals GC1c and GC2c performs the function of a TX signal control signal. According to embodiments, the TX signal controller 360e may generate the at least one of the control signals GC1c and/or GC2c in response to receiving the RFIC control signal CTLe and/or may generate the at least one of the control signals GC1c and/or GC2c based on a corresponding indication included in the RFIC control signal CTLe.

According to embodiments, in response to the first gain control signal GC1c, the first amplifier 320 reduces the magnitude of the output signal of the DAC 315, and outputs the signal having the reduced magnitude to the first mixer 330 (S140).

According to embodiments, in response to the second gain control signal GC2c, the second amplifier 335 reduces the magnitude of the output signal of the first mixer 330 and outputs the signal having the reduced magnitude to the power amplifier 410 (S140).

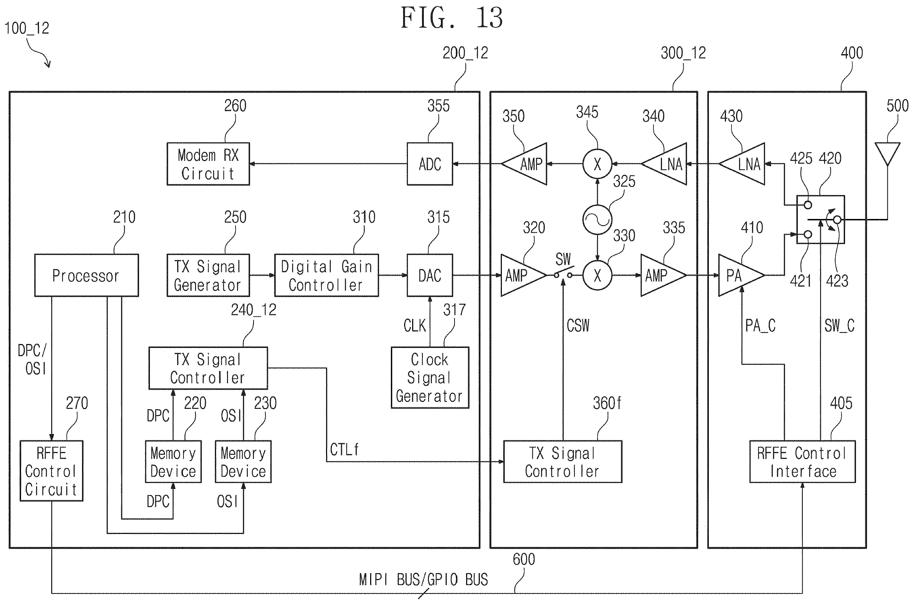

FIG. 13 is a block diagram of an electronic system including an RFIC having a TX signal controller configured to generate a switch control signal, according to embodiments of the present disclosure.

Referring to FIG. 13, the electronic system 100_12 includes the modem 200_12, the RFIC 300_12, the RFFE 400, and/or the antenna 500.

The modem 200_12 includes the processor 210, the first memory device 220, the second memory device 230, a TX signal controller 240_12, the TX signal generator 250, the digital gain controller 310, the DAC 315, the clock signal generator 317, the modem RX circuit 260, the RFFE control circuit 270, and/or the ADC 355. According to embodiments, the modem 200_12 may not include the digital gain controller 310.

The RFIC 300_12 includes the first amplifier 320, the local oscillator 325, the first mixer 330, the second amplifier 335, the LNA 340, the second mixer 345, the third amplifier 350, a TX signal controller 360f, and/or the switch circuit SW.

FIG. 13 shows an example in which the switch circuit SW is located between the first amplifier 320 and the first mixer 330. However, according to embodiments, the switch circuit SW may be positioned between the two corresponding components 315 and 320, the two corresponding components 330 and 335, or the two corresponding components 335 and 410.

Referring to FIGS. 2, 13, and 18, it is assumed that the processor 210 of the modem 200_12 stores the damage prevention condition DPC in the first memory device 220 and stores the operating state information OSI corresponding to case 2 CASE2 in the second memory device 230 (S110).

The processor 210 of the modem 200_12 programs the operating state information OSI corresponding to case 2 CASE2 in the RFFE control interface 405 through the RFFE control circuit 270 and the external bus 600.

The TX signal controller 240_12 of the modem 200_12 compares the damage prevention condition DPC with the operating state information OSI and generates an RFIC control signal CTLf depending on the comparison result (S120).

When the operating state information OSI does not satisfy the damage prevention condition DPC (NO of S120), the TX signal controller 360f of the RFIC 300_12 generates the switch control signal CSW depending on the RFIC control signal CTLf generated by the TX signal controller 240_12 of the modem 200_12. According to embodiments, the switch control signal CSW performs the function of a TX signal control signal.

Because the switch circuit SW is turned off in response to the switch control signal CSW, an output terminal of the first amplifier 320 and an input terminal of the first mixer 330 are separated from each other (S140).

According to embodiments described with reference to FIGS. 2 and 8 to 13, the modem 200_7, 200_8, 200_9, 200_10, 200_11, or 200_12 performs an operation of comparing the damage prevention condition DPC and the operating state information OSI and generating the RFIC control signal CTLa, CTLb, CTLc, CTLd, CTLe, or CTLf depending on the comparison result (e.g., OSI ≠ DPC). The RFIC 300_7, 300_8, 300_9, 300_10, 300_11, or 300_12 performs an operation of blocking the TX signal to be transmitted to the RFFE 400 or reducing the magnitude of the TX signal in response to the RFIC control signal CTLa, CTLb, CTLc, CTLd, CTLe, or CTLf.

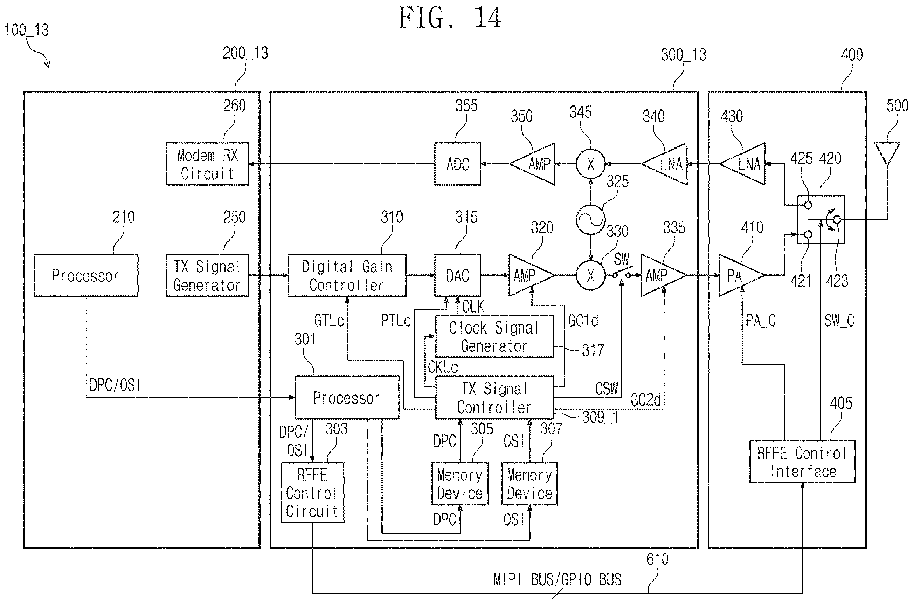

FIG. 14 is a block diagram of an electronic system including an RFIC having a processor and a TX signal controller configured to generate at least one of six control signal signals, according to embodiments of the present disclosure.

Referring to FIG. 14, the electronic system 100_13 includes the modem 200_13, the RFIC 300_13, the RFFE 400, and/or the antenna 500.

The modem 200_13 includes the processor 210, the TX signal generator 250, and/or the modem RX circuit 260.

The RFIC 300_13 includes an RFIC processor 301 (this is referred to as a "control circuit"), an RFFE control circuit 303, the third memory device 305, the fourth memory device 307, a TX signal controller 309_1, the digital gain controller 310, the DAC 315, the clock signal generator 317, the first amplifier 320, the local oscillator 325, the first mixer 330, the second amplifier 335, the LNA 340, the second mixer 345, the third amplifier 350, the ADC 355, and/or the switch circuit SW. According to embodiments, the RFIC 300_13 may not include the digital gain controller 310.

Referring to FIGS. 2, 14, and 18, it is assumed that the RFIC processor 301 of the RFIC 300_13 used as a TX signal transmission control device stores (or writes) the damage prevention condition DPC in the third memory device 305 and stores (or writes) the operating state information OSI corresponding to case 2 CASE2 in the fourth memory device 307 when the processor 210 transmits the damage prevention condition DPC and the operating state information OSI corresponding to case 2 CASE2 to the RFIC processor 301 (5110).

According to embodiments, whenever the RFIC processor 301 transmits new operating state information OSI to the RFFE control interface 405 through the RFFE control circuit 303 and the external bus 610, the RFIC processor 301 may update previous operating state information stored in the fourth memory device 307 to the new operating state information OSI.

According to embodiments, because an update history for the operating state information OSI is stored in the fourth memory device 307, the RFIC processor 301 may read the update history.

The RFIC processor 301 of the RFIC 300_13 programs the operating state information OSI corresponding to case 2 CASE2 in the RFFE control interface 405 through the RFFE control circuit 303 and the external bus 610.

The external bus 610 may be a MIPI bus capable of transmitting signals corresponding to a MIPI protocol, or a GPIO bus connected to GPIO pins, but is not limited thereto.

The TX signal controller 309_1 of the RFIC 300_13 compares the damage prevention condition DPC with the operating state information OSI (S120). When the operating state information OSI does not satisfy the damage prevention condition DPC (NO in S120), the TX signal controller 309_1 of the RFIC 300_13 generates at least one of a magnitude control signal GTLc, a power control signal PTLc, a clock signal control signal CKLc, a first gain control signal GC1d, a second gain control signal GC2d, and/or the switch control signal CSW. According to embodiments, each of the control signals GTLc, PTLc, CKLc, GC1d, GC2d, and CSW performs the function of a TX signal control signal.

According to embodiments, in response to the magnitude control signal GTLc, the digital gain controller 310 reduces the magnitude of the digital TX signal generated by the TX signal generator 250 and transmits the digital TX signal having the reduced magnitude to the DAC 315 (S140).

According to embodiments, the DAC 315 is disabled or powered off in response to the power control signal PTLc (S140). For example, the operating voltage supplied to the DAC 315 may be blocked by the power control signal PTLc (S140).

According to embodiments, in response to the clock signal control signal CKLc, the clock signal generator 317 may be disabled or may block the clock signal CLK supplied to the DAC 315 (S140).

According to embodiments, in response to the first gain control signal GC1d, the first amplifier 320 reduces the magnitude of the output signal of the DAC 315, and outputs the signal having the reduced magnitude to the first mixer 330 (S140).

According to embodiments, while the switch circuit SW is turned on, the second amplifier 335 reduces the magnitude of the output signal of the first mixer 330 and outputs the signal having the reduced magnitude to the power amplifier 410 in response to the second gain control signal GC2d (S140). According to embodiments, while the switch circuit SW is turned off, the second amplifier 335 may amplify the magnitude of the output signal of the first mixer 330 as discussed above.

According to embodiments, because the switch circuit SW is turned off in response to the switch control signal CSW, an output terminal of the first mixer 330 and an input terminal of the second amplifier 335 are electrically separated from each other (S140).

Referring to FIG. 14, a TX control circuit means at least one of the components 310, 315, 317, 320, 335, and/or SW or a combination thereof.

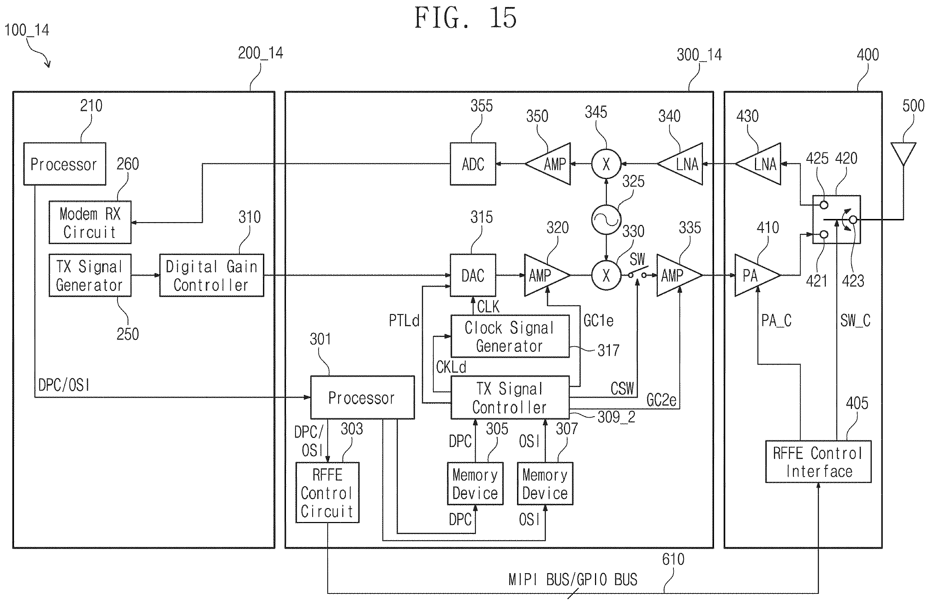

FIG. 15 is a block diagram of an electronic system including an RFIC having a processor and a TX signal controller configured to generate at least one of five control signal signals, according to embodiments of the present disclosure.

Referring to FIG. 15, the electronic system 100_14 includes the modem 200_14, the RFIC 300_14, the RFFE 400, and/or the antenna 500.

The modem 200_14 includes the processor 210, the TX signal generator 250, the digital gain controller 310, and/or the modem RX circuit 260. According to embodiments, the modem 200_14 may not include the digital gain controller 310.

The RFIC 300_14 includes the RFIC processor 301, the RFFE control circuit 303, the third memory device 305, the fourth memory device 307, a TX signal controller 309_2, the DAC 315, the clock signal generator 317, the first amplifier 320, the local oscillator 325, the first mixer 330, the second amplifier 335, the LNA 340, the second mixer 345, the third amplifier 350, the ADC 355, and/or the switch circuit SW.

Referring to FIGS. 2, 15, and 18, it is assumed that the RFIC processor 301 of the RFIC 300_14 used as a TX signal transmission control device stores the damage prevention condition DPC in the third memory device 305 and stores the operating state information OSI corresponding to case 2 CASE2 in the fourth memory device 307 when the processor 210 transmits the damage prevention condition DPC and the operating state information OSI of case 2 CASE2 to the RFIC processor 301 (S110).

The RFIC processor 301 of the RFIC 300_14 sets (or programs) the operating state information OSI corresponding to case 2 CASE2 in the RFFE control interface 405 through the RFFE control circuit 303 and the external bus 610.

The TX signal controller 309_2 of the RFIC 300_14 compares the damage prevention condition DPC with the operating state information OSI (S120). When the operating state information OSI does not satisfy the damage prevention condition DPC (NO in S120), the TX signal controller 309_2 of the RFIC 300_14 generates at least one of a power control signal PTLd, a clock signal control signal CKLd, a first gain control signal GC1e, a second gain control signal GC2e, and/or the switch control signal CSW. According to embodiments, each of the control signals PTLd, CKLd, GC1e, GC2e, and CSW performs the function of a TX signal control signal.

According to embodiments, the DAC 315 is disabled or powered off in response to the power control signal PTLd (S140). For example, the operating voltage supplied to the DAC 315 may be blocked by the power control signal PTLd (S140).

According to embodiments, in response to the clock signal control signal CKLd, the clock signal generator 317 may be disabled or may block the clock signal CLK supplied to the DAC 315 (S140).

According to embodiments, in response to the first gain control signal GC1e, the first amplifier 320 reduces the magnitude of the output signal of the DAC 315, and outputs the signal having the reduced magnitude to the first mixer 330 (S140).

According to embodiments, while the switch circuit SW is turned on, the second amplifier 335 reduces the magnitude of the output signal of the first mixer 330 and outputs the signal having the reduced magnitude to the power amplifier 410 in response to the second gain control signal GC2e (S140). According to embodiments, while the switch circuit SW is turned off, the second amplifier 335 may amplify the magnitude of the output signal of the first mixer 330 as discussed above.

According to embodiments, because the switch circuit SW is turned off in response to the switch control signal CSW, an output terminal of the first mixer 330 and an input terminal of the second amplifier 335 are electrically separated from each other (S140).

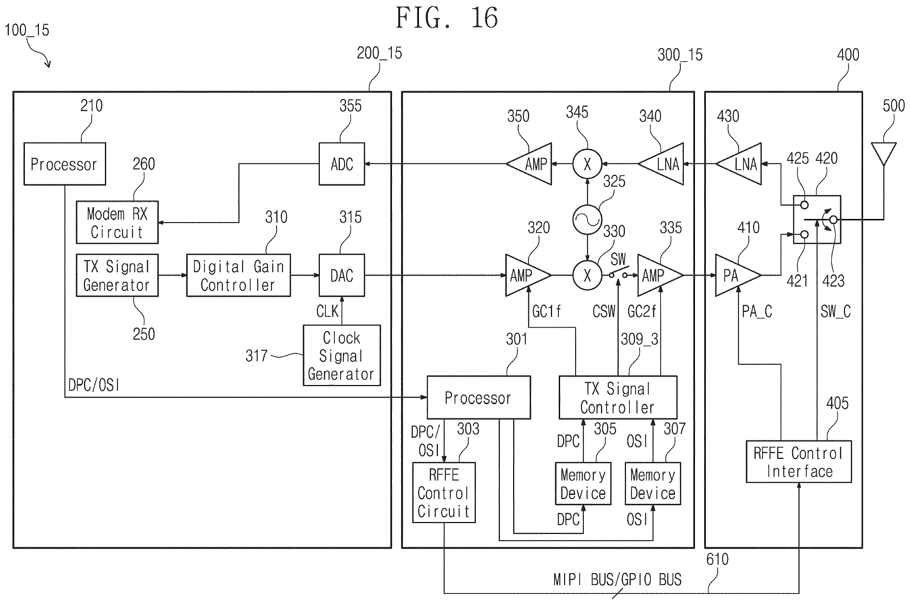

FIG. 16 is a block diagram of an electronic system including an RFIC having a processor and a TX signal controller configured to generate at least one of three control signal signals, according to embodiments of the present disclosure.

Referring to FIG. 16, the electronic system 100_15 includes the modem 200_15, the RFIC 300_15, the RFFE 400, and/or the antenna 500.

The modem 200_15 includes the processor 210, the TX signal generator 250, the digital gain controller 310, the DAC 315, the clock signal generator 317, the modem RX circuit 260, and/or the ADC 355. According to embodiments, the modem 200_15 may not include the digital gain controller 310.

The RFIC 300_15 includes the RFIC processor 301, the RFFE control circuit 303, the third memory device 305, the fourth memory device 307, a TX signal controller 309_3, the first amplifier 320, the local oscillator 325, the first mixer 330, the second amplifier 335, the LNA 340, the second mixer 345, the third amplifier 350, and/or the switch circuit SW.

Referring to FIGS. 2, 16, and 18, it is assumed that the RFIC processor 301 of the RFIC 300_15 used as a TX signal transmission control device stores the damage prevention condition DPC in the third memory device 305 and stores the operating state information OSI of case 2 CASE2 in the fourth memory device 307 when the processor 210 transmits the damage prevention condition DPC and the operating state information OSI of case 2 CASE2 to the RFIC processor 301 (S110).

The RFIC processor 301 of the RFIC 300_15 programs the operating state information OSI corresponding to case 2 CASE2 in the RFFE control interface 405 through the RFFE control circuit 303 and the external bus 610.

The TX signal controller 309_3 of the RFIC 300_15 compares the damage prevention condition DPC with the operating state information OSI (S120). When the operating state information OSI does not satisfy the damage prevention condition DPC (NO in S120), the TX signal controller 309_3 of the RFIC 300_15 generates at least one of a first gain control signal GC1f, a second gain control signal GC2f, and/or the switch control signal CSW. According to embodiments, each of the control signals GC1f, GC2f, and CSW performs the function of a TX signal control signal.

According to embodiments, in response to the first gain control signal GC1f, the first amplifier 320 reduces the magnitude of the output signal of the DAC 315, and outputs the signal having the reduced magnitude to the first mixer 330 (S140).

According to embodiments, while the switch circuit SW is turned on, the second amplifier 335 reduces the magnitude of the output signal of the first mixer 330 and outputs the signal having the reduced magnitude to the power amplifier 410 in response to the second gain control signal GC2f (S140). According to embodiments, while the switch circuit SW is turned off, the second amplifier 335 may amplify the magnitude of the output signal of the first mixer 330 as discussed above.

According to embodiments, because the switch circuit SW is turned off in response to the switch control signal CSW, an output terminal of the first mixer 330 and an input terminal of the second amplifier 335 are blocked from each other (S140).

According to embodiments described with reference to FIGS. 14 to 16, the RFIC 300_13, 300_14, or 300_15 performs an operation of comparing the damage prevention condition DPC and the operating state information OSI, an operation of generating at least one control signal GTLc, PTLc, CKLc, GC1d, GC2d, and/or CSW in FIG. 14, PTLd, CLKd, GC1e, GC2e in FIG. 15, and/or CSW, or GC1f, GC2f, and/or CSW of FIG. 16 when the operating state information OSI does not satisfy the damage prevention condition DPC, and an operation of blocking the TX signal to be transmitted to the RFFE 400 or reducing the magnitude of the TX signal by using at least one control signal GTLc, PTLc, CKLc, GC1d, GC2d, and/or CSW of FIG. 14, PTLd, CLKd, GC1e, GC2e, and/or CSW of FIG. 15, or GC1f, GC2f, and/or CSW of FIG. 16.

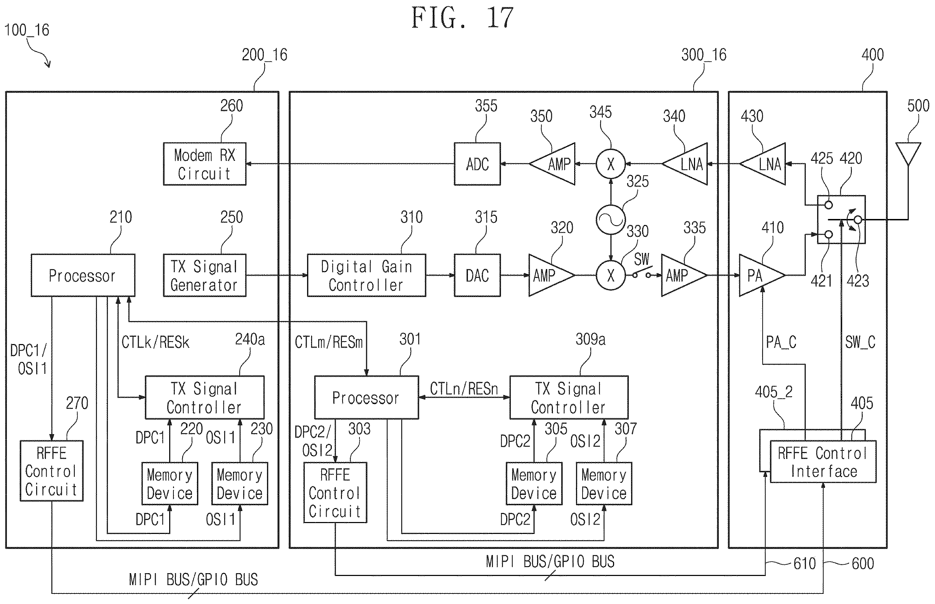

FIG. 17 is a block diagram of an electronic system for controlling transmission of a TX signal to be transmitted to an RFFE having a plurality of RFFE control interfaces, according to embodiments of the present disclosure.

Referring to FIG. 17, the electronic system 100_16 includes the modem 200_16, the RFIC 300_16, the RFFE 400, and/or the antenna 500.

The modem 200_16 includes the processor 210, the first memory device 220, the second memory device 230, a first TX signal controller 240a, the TX signal generator 250, the modem RX circuit 260, and the first RFFE control circuit 270.

The RFIC 300_16 includes the RFIC processor 301, the second RFFE control circuit 303, the third memory device 305, the fourth memory device 307, a second TX signal controller 309a, the digital gain controller 310, the DAC 315, the clock signal generator 317, the first amplifier 320, the local oscillator 325, the first mixer 330, the second amplifier 335, the LNA 340, the second mixer 345, the third amplifier 350, the ADC 355, and/or the switch circuit SW. According to embodiments, the RFIC 300_16 may not include the digital gain controller 310.

Referring to FIGS. 2, 17, and 18, when the processor 210 transmits a first damage prevention condition DPC1 or first operating state information OSI1 to the first RFFE control circuit 270, the first RFFE control circuit 270 transmits the first damage prevention condition DPC1 or the first operating state information OSI1 to the first RFFE control interface 405 through the first external bus 600. The first RFFE control interface 405 controls operations of the power amplifier 410 and the RF TX/RX switch 420 by using the first damage prevention condition DPC1 or the first operating state information OSI1.

It is assumed that the processor 210 stores the first damage prevention condition DPC1 in the first memory device 220 and stores the first operating state information OSI1 in the second memory device 230 (S110). According to embodiments, the first damage prevention condition DPC1 and the first operating state information OSI1 may be stored in one memory device.

The first TX signal controller 240a compares the first operating state information OSI1 and the first damage prevention condition DPC1 (S120). When the first operating state information OSI1 does not satisfy the first damage prevention condition DPC1 (e.g., when the first operating state information OSI1 is different from the first damage prevention condition DPC1, NO of S120), the first TX signal controller 240a generates a TX signal control signal (not shown) for stopping an operation of the TX signal generator 250 or blocking an operation of transmitting a digital TX signal generated by the TX signal generator 250 to the RFIC 300_16 (S140).

When the RFIC processor 301 transmits a second damage prevention condition DPC2 or second operating state information OSI2 to the second RFFE control circuit 303, the second RFFE control circuit 303 transmits the second damage prevention condition DPC2 or the second operating state information OSI2 to a second RFFE control interface 405_2 through the second external bus 610.

The second RFFE control interface 405_2 controls an operation of a power amplifier (not shown) included in the RFFE 400 and an RF TX/RX switch (not shown) by using the second damage prevention condition DPC2 or the second operating state information OSI2. For example, an operation of the second RFFE control interface 405_2 controlling the power amplifier and the RF TX/RX switch may be similar to that of the first RFFE control interface 405.

It is assumed that the RFIC processor 301 stores the second damage prevention condition DPC2 in the third memory device 305 and stores the second operating state information OSI2 in the fourth memory device 307 when the processor 210 of the modem 200_16 transmits the second damage prevention condition DPC2 and the second operating state information OSI2 to the RFIC processor 301 of the RFIC 300_16 (S110). According to embodiments, the second damage prevention condition DPC2 and the second operating state information OSI2 may be stored in one memory device.

The second TX signal controller 309a of the RFIC 300_16 compares the second operating state information OSI2 and the second damage prevention condition DPC2 (S120). When the second operating state information OSI2 does not satisfy the second damage prevention condition DPC2 (e.g., when the second operating state information OSI2 is different from the second damage prevention condition DPC2, NO of S120), the second TX signal controller 309a of the RFIC 300_16 generates at least one first TX signal control signal (not shown) for stopping (or disabling) an operation of at least one of the TX control circuits 310, 315, 317, 320, and/or 335 of a first group, and generates at least one second TX signal control signal (not shown) for reducing a magnitude of an output signal output from at least one of the TX control circuits 310, 320, and/or 335 of a second group (S140).

According to embodiments, the second damage prevention condition DPC2 may be the same as (or similar to) the first damage prevention condition DPC1. The second operating state information OSI2 may be the same as (or similar to) the first operating state information OSI1.

When the control signals PA_C and SW_C are generated depending on the first operating state information OSI1, the power amplifier 410 controlled by the first RFFE control interface 405 may be damaged or burnt out.

For example, when the control signals PA_C and SW_C are generated depending on the first operating state information OSI1 while the TX signal to be transmitted to the RFFE 400 is not blocked or the magnitude of the TX signal is not reduced, the RFFE 400 or the RFFE element 410 may be damaged or burnt out.

The first TX signal controller 240a of the modem 200_16 generates a first TX signal control signal CTLk corresponding to the comparison result between the first damage prevention condition DPC1 and the first operating state information OSI1 and then outputs the first TX signal control signal CTLk to the processor 210.

When the second TX signal controller 309a of the RFIC 300_16 generates a second TX signal control signal CTLn corresponding to the comparison result between the second damage prevention condition DPC2 and the second operating state information OSI2 and transmits the second TX signal control signal CTLn to the RFIC processor 301, the RFIC processor 301 generates a third TX signal control signal (CTLm = CTLn) corresponding to the second TX signal control signal CTLn and transmits the third TX signal control signal to the processor 210.

The processor 210 of the modem 200_16 analyzes the first TX signal control signal CTLk and the third TX signal control signal (CTLm=CTLn), transmits a first response signal RESk corresponding to the analysis result to the first TX signal controller 240a, and transmits a second response signal RESm corresponding to the analysis result to the RFIC processor 301.

The first TX signal controller 240a generates a TX signal control signal (not shown) for stopping an operation of the TX signal generator 250 or an operation of blocking transmission of the digital TX signal generated by the TX signal generator 250 to the RFIC 300_16 in response to the first response signal RESk.

The RFIC processor 301 analyzes the second response signal RESm, generates a third response signal RESn corresponding to the analysis result, and transmits the third response signal RESn to the second TX signal controller 309a.

The second TX signal controller 309a generates at least one first TX signal control signal (not shown) for stopping (or disabling) an operation of at least one of the TX control circuits 310, 315, 317, 320, and/or 335 of the first group, and generates at least one second TX signal control signal (not shown) for reducing a magnitude of an output signal of at least one of the TX control circuits 310, 320, and/or 335 of the second group.

It is shown that the modem 200_16 shown in FIG. 17 includes the TX signal generator 250. However, according to embodiments, as shown in FIG. 3, the modem 200_16 may further include the digital gain controller 310. As shown in FIG. 4, the modem 200_16 may further include the digital gain controller 310, the DAC 315, and the clock signal generator 317. In the case, a configuration of the RFIC 300_16 may be changed to correspond to a configuration additionally included in the modem 200_16.

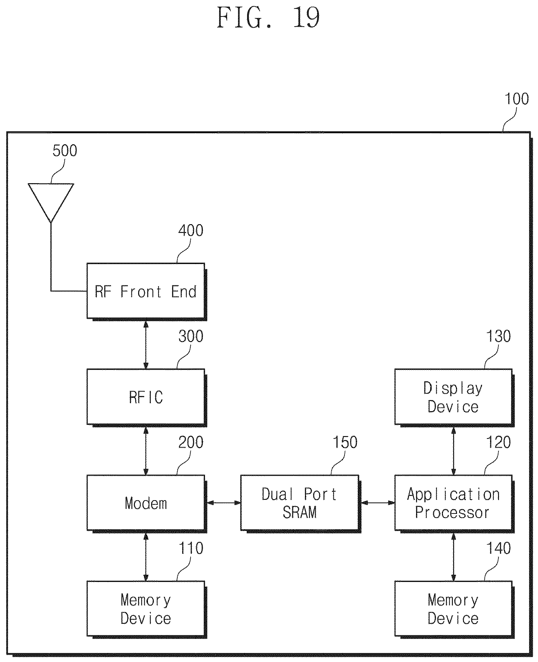

FIG. 19 is a block diagram of a mobile device controlling transmission of a TX signal to be transmitted to an RFFE, according to embodiments of the present disclosure.

Referring to FIG. 19, the electronic system 100 includes a fifth memory device 110, an application processor 120, a display device 130, a sixth memory device 140, a seventh memory device 150, the modem 200, the RFIC 300, the RFFE 400, and/or the antenna 500.

The electronic system 100 may be a mobile device, and examples of the mobile device may be a smart phone, a laptop computer, an Internet of Things (IoT) device, and/or a wearable computer.

The modem 200 collectively represents each of the modems 200_1 to 200_16 described with reference to FIGS. 1 to 17. The RFIC 300 collectively represents each of the RFICs 300_1 to 300_16 described with reference to FIGS. 1 to 17.

A signal processed or to be processed by the modem 200 is stored in the fifth memory device 110 or is transmitted to the application processor 120 through the seventh memory device 150.

A signal processed or to be processed by the application processor 120 is stored in the sixth memory device 140, or is transmitted to the modem 200 through the seventh memory device 150.

The seventh memory device 150 may be a memory device (e.g., a dual-ported random access memory (RAM) or dual-ported static random access memory (SRAM)) capable of processing data exchanged between the modem 200 and the application processor 120, but is not limited thereto.

The display device 130 receives data processed by the application processor 120 and then displays an image corresponding to the data.

As described with reference to FIGS. 1 to 19, a TX signal transmission control device may be a first electronic device (e.g., modem) or a second electronic device (e.g., RFIC).

A TX control circuit performing a function of blocking the transmission of the TX signal to be transmitted from a TX signal transmission control device to the RFFE 400 and/or reducing a magnitude of the TX signal may be one of the TX signal generator 250, the digital gain controller 310, the DAC 315, the clock signal generator 317, the first amplifier 320, the second amplifier 335, and/or the switch circuit SW, or a combination thereof.

The present disclosure has been described with reference to the drawings, but these are only examples, and it will be understood that various modifications and other equivalent examples are possible from this point by those skilled in the art. Accordingly, the technical protection scope of the present disclosure will be defined by the technical spirit of the appended claims.

According to embodiments of the present disclosure, an electronic device may determine whether operating state information of an RFFE satisfies a damage prevention condition of the RFFE, and may block a TX signal to be transmitted to the RFFE or reduce a magnitude of the TX signal, when the operating state information of the RFFE does not satisfy the damage prevention condition of the RFFE, thereby preventing (or reducing) damage or burnout of the RFFE.

Moreover, according to embodiments of the present disclosure, when the operating state information of the RFFE does not satisfy the damage prevention condition of the RFFE, an electronic device may record the operating state information of the RFFE in a memory device, and thus an administrator may easily identify (or obtain) the operating state information recorded in the memory device.

Accordingly, an administrator who identifies the recorded operating state information may easily analyze a setting process (or setting history) for the operating state information of the RFFE.

In conventional communication devices utilizing a radio frequency front end (RFFE) having a power amplifier and an RF TX/RX switch, the power amplifier becomes damaged by a transmission signal under certain conditions. For example, when the RF TX/RX is set to be in a reception state, the transmission signal amplified by the power amplifier is reflected back to an output of the power amplifier causing damage to the power amplifier (e.g., causing the power amplified to become burnt out). In another example, when the power amplifier is disabled (or off) a transmission signal input (e.g., continuously input) into the power amplifier causes damage to the power amplifier (e.g., causes the power amplified to become burnt out).

However, according to embodiments, improved devices and methods are provided for operating an RFFE having a power amplifier and a RF TX/RX switch. For example, in circumstances in which it is determined that a transmission signal is to be sent, the improved devices may determine a configuration of the RFFE. Determining the configuration of the RFFE may include determining whether the power amplifier is enabled and/or whether the RF TX/RX switch is set to a transmission state. In the event the improved devices determine that the power amplifier is not enabled and/or the RF TX/RX switch is not set to a transmission state, the improved devices may block and/or reduce a magnitude of the transmission signal. Accordingly, the improved devices and methods overcome the deficiencies of the conventional devices and methods to at least prevent or reduce damage to the power amplifier.

According to embodiments, operations described herein as being performed by the electronic system 100_1, the modem 200_1, the RFIC 300_1, the RFFE 400, the processor 210, the TX signal controller 240_1, the TX signal generator 250, the modem RX circuit 260, the RFFE control circuit 270, the digital gain controller 310, the DAC 315, the clock signal generator 317, the first mixer 330, the second mixer 345, the ADC 355, the RFFE control interface 405, the electronic system 100_2, the modem 200_2, the RFIC 300_2, the TX signal controller 240_2, the electronic system 100_3, the modem 200_3, the RFIC 300_3, the TX signal controller 240_3, the electronic system 100_4, the modem 200_4, the RFIC 300_4, the TX signal controller 240_4, the electronic system 100_5, the modem 200_5, the RFIC 300_5, the TX signal controller 240_5, the electronic system 100_6, the modem 200_6, the RFIC 300_6, the TX signal controller 240_6, the electronic system 100_7, the modem 200_7, the RFIC 300_7, the TX signal controller 240_7, the TX signal controller 360a, the electronic system 100_8, the modem 200_8, the RFIC 300_8, the TX signal controller 240_8, the TX signal controller 360b, the electronic system 100_9, the modem 200_9, the RFIC 300_9, the TX signal controller 240_9, the TX signal controller 360c, the electronic system 100_10, the modem 200_10, the RFIC 300_10, the TX signal controller 240_10, the TX signal controller 360d, the electronic system 100_11, the modem 200_11, the RFIC 300_11, the TX signal controller 240_11, the TX signal controller 360e, the electronic system 100_12, the modem 200_12, the RFIC 300_12, the TX signal controller 240_12, the TX signal controller 360f, the electronic system 100_13, the modem 200_13, the RFIC 300_13, the RFIC processor 301, the second RFFE control circuit 303, the TX signal controller 309_1, the electronic system 100_14, the modem 200_14, the RFIC 300_14, the TX signal controller 309_2, the electronic system 100_15, the modem 200_15, the RFIC 300_15, the TX signal controller 309_3, the electronic system 100_16, the modem 200_16, the RFIC 300_16, the first TX signal controller 240a, the second TX signal controller 309a, the second RFFE control interface 405_2, the electronic system 100, the application processor 120, the modem 200, the RFIC 300 and/or the RFFE 400 may be performed by processing circuitry. The term 'processing circuitry,' as used in the present disclosure, may refer to, for example, hardware including logic circuits; a hardware/software combination such as a processor executing software; or a combination thereof. For example, the processing circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc. According to embodiments, switches described herein (e.g., with respect to the RF TX/RX switch 420 and/or the switch circuit SW) may be implemented using at least one circuit element (e.g., a transistor).

The various operations of methods described above may be performed by any suitable device capable of performing the operations, such as the processing circuitry discussed above. For example, as discussed above, the operations of methods described above may be performed by various hardware and/or software implemented in some form of hardware (e.g., processor, ASIC, etc.).

The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or operations of a method or algorithm and functions described in connection with embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium (e.g., the first memory device 220, the second memory device 230, the third memory device 305, the fourth memory device 307, the fifth memory device 110, the sixth memory device 140 and/or the seventh memory device 150). A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Embodiments may be described with reference to acts and symbolic representations of operations (e.g., in the form of flow charts, flow diagrams, data flow diagrams, structure diagrams, block diagrams, etc.) that may be implemented in conjunction with units and/or devices discussed in more detail herein. Although discussed in a particular manner, a function or operation specified in a specific block may be performed differently from the flow specified in a flowchart, flow diagram, etc. For example, functions or operations illustrated as being performed serially in two consecutive blocks may actually be performed concurrently, simultaneously, contemporaneously, or in some cases be performed in reverse order.

It will be understood that when an element is referred to as being "connected" or "coupled" to another element, it may be directly connected or coupled to the other element or intervening elements may be present. As used herein the term "and/or" includes any and all combinations of one or more of the associated listed items.

Although terms of "first" or "second" may be used to explain various components, the components are not limited to the terms. These terms should be used only to distinguish one component from another component. For example, a "first" component may be referred to as a "second" component, or similarly, and the "second" component may be referred to as the "first" component. Expressions such as "at least one of" when preceding a list of elements, modify the entire list of elements and do not modify the individual elements of the list. For example, the expression, "at least one of a, b, and c," should be understood as including only a, only b, only c, both a and b, both a and c, both b and c, all of a, b, and c, or any variations of the aforementioned examples.

While the present disclosure has been described with reference to embodiments thereof, it will be apparent to those of ordinary skill in the art that various changes and modifications may be made thereto without departing from the spirit and scope of the present disclosure as set forth in the following claims.

## Claims

1. An electronic device comprising:
a memory device configured to store operating state information of a radio frequency front end (RFFE) and a damage prevention condition of the RFFE, the RFFE providing a signal path for delivering a first transmission (TX) signal to an antenna; and
a TX signal controller configured to generate a TX signal control signal in response to determining that the operating state information does not satisfy the damage prevention condition, the TX signal control signal causing the first TX signal to be blocked or a magnitude of the first TX signal to be reduced.

2. The electronic device of claim 1, further comprising:
a TX signal generator configured to generate a digital TX signal associated with the first TX signal, the TX signal control signal causing the TX signal generator to blocks the generation of the digital TX signal.

3. The electronic device of claim 1, further comprising:
a TX signal generator configured to generate a digital TX signal associated with the first TX signal; and
a TX control circuit configured to,
receive the digital TX signal, and
reduce a magnitude of the digital TX signal in response to the TX signal control signal.

4. The electronic device of claim 1, further comprising:
a TX signal generator configured to generate a digital TX signal;
a clock signal generator configured to generate a clock signal; and
a digital-to-analog converter configured to convert the digital TX signal into an analog TX signal in response to the clock signal, the analog TX signal corresponding to the first TX signal, the TX signal control signal causing at least one of the TX signal generator, the clock signal generator or the digital-to-analog converter to become disabled or off.

5. The electronic device of claim 1, further comprising:
a TX signal generator configured to generate a digital TX signal associated with the first TX signal; and
a processor configured to control the TX signal generator to become disabled or off in response to receiving the TX signal control signal.

6. The electronic device of claim 1, further comprising:
a TX signal generator configured to generate a digital TX signal corresponding to the first TX signal;
a TX control circuit configured to receive the digital TX signal; and
a processor configured to control the TX control circuit to reduce a magnitude of the digital TX signal in response to receiving the TX signal control signal.

7. The electronic device of claim 1, further comprising:
a TX signal generator configured to generate a digital TX signal;
a clock signal generator configured to generate a clock signal;
a digital-to-analog converter configured to convert the digital TX signal into an analog TX signal in response to the clock signal, the analog TX signal corresponding to the first TX signal; and
a processor configured to control at least one of the TX signal generator, the clock signal generator or the digital-to-analog converter to become disabled or off in response to receiving the TX signal control signal.

8. An electronic device comprising:
a memory device configured to store operating state information of an RFFE and a damage prevention condition of the RFFE, the RFFE providing a signal path for delivering a first transmission (TX) signal to an antenna;
a processor configured to,
receive the operating state information and the damage prevention condition, and
write the operating state information and the damage prevention condition in the memory device; and
a TX signal controller configured to generate a TX signal control signal in response to determining that the operating state information does not satisfy the damage prevention condition, the TX signal control signal causing the first TX signal to be blocked or a magnitude of the first TX signal to be reduced.

9. The electronic device of claim 8, further comprising:
a TX control circuit configured to,
receive a digital TX signal transmitted, and
reduce a magnitude of the digital TX signal in response to the TX signal control signal; and
a digital-to-analog converter configured to convert the digital TX signal having the reduced magnitude into an analog TX signal, the analog TX signal corresponding to the first TX signal.

10. The electronic device of claim 8, further comprising:
a digital-to-analog converter configured to convert a digital TX signal into an analog TX signal corresponding to the first TX signal, the TX signal control signal causing the digital-to-analog converter to become disabled or off.

11. The electronic device of claim 8, further comprising:
a digital-to-analog converter configured to,
receive a digital TX signal, and
convert the digital TX signal into an analog TX signal in response to a clock signal, the analog TX signal corresponding to the first TX signal; and
a clock signal generator configured to generate the clock signal, the TX signal control signal causing at least one of the digital-to-analog converter or the clock signal generator to become disabled or off.

12. The electronic device of claim 8, further comprising:
an amplifier configured to,
receive the first TX signal transmitted, and
reduce a magnitude of the first TX signal to be transmitted to the RFFE in response to the TX signal control signal.

13. The electronic device of claim 8, further comprising:
a switch circuit configured to block the first TX signal to be transmitted to the RFFE in response to the TX signal control signal.

14. An electronic system comprising:
an RFFE configured to provide a signal path for delivering a first transmission (TX) signal to an antenna;
a memory device configured to store operating state information of the RFFE and a damage prevention condition of the RFFE; and
a TX signal controller configured to generate a TX signal control signal in response to determining the operating state information does not satisfy the damage prevention condition, the TX signal control signal causing the first TX signal to be blocked or a magnitude of the first TX signal to be reduced.

15. The electronic system of claim 14, further comprising:
a TX signal generator configured to generate a digital TX signal associated with the first TX signal, the TX signal control signal causing the TX signal generator to become disabled or off.
